# EUROPEAN PATENT SPECIFICATION

(11) **EP 3 879 787 B1**
(45) Date of publication and mention of the grant of the patent: **18.06.2025**
(21) Application number: 19882531.7
(22) Date of filing: 05.11.2019
(51) Int. Cl.: H04L 67/104

(54) **COMMUNICATION METHOD AND SYSTEM UNDER MICRO-SERVICE ARCHITECTURE**
KOMMUNIKATIONSVERFAHREN UND -SYSTEM UNTER MIKRODIENSTARCHITEKTUR
PROCÉDÉ ET SYSTÈME DE COMMUNICATION DANS UNE ARCHITECTURE DE MICRO-SERVICES

(30) Priority: 05.11.2018 CN 201811306618
(43) Date of publication of application: 15.09.2021
(73) Proprietor: ZTE Corporation, Shenzhen, Guangdong 518057 (CN)
(72) Inventor: LI, Jiao, Shenzhen, Guangdong 518057 (CN); LIU, Zhihua, Shenzhen, Guangdong 518057 (CN); LI, Xiaorui, Shenzhen, Guangdong 518057 (CN); ZHOU, Yi, Shenzhen, Guangdong 518057 (CN); YAN, Juming, Shenzhen, Guangdong 518057 (CN); LIU, Yingchun, Shenzhen, Guangdong 518057 (CN)
(74) Representative: Brunazzi, Stefano
(86) International application number: PCT/CN2019/115776
(87) International publication number: WO 2020/094021

(56) References cited:
- CN-A- 106 411 933
- CN-A- 106 453 288
- CN-A- 107 635 022
- CN-A- 108 206 852
- CN-A- 108 206 852
- US-A1- 2016 112 475
- CHRIS RICHARDSON ET AL: "MICROSERVICES - From Design to Deployment", 18 May 2016 (2016-05-18), NGINX Website, pages 1 - 80, XP055406350, Retrieved from the Internet <URL:https://www.nginx.com/blog/microservices-from-design-to-deployment-ebook-nginx/> [retrieved on 20170913]

## Description

### Technical Field

The present disclosure relates, but is not limited, to the technical field of communication, and more particularly, to a communication method and system under micro-service architecture.

### Background

In the field of mobile communication, the current mobile network architecture is designed for voice communication and regular Mobile Broadband (MBB) services, and has undergone the upgrade of various Third Generation Partnership Project (3GPP) versions. The current mobile network architecture involves a large number of network elements and complex interfaces, and its flexibility is insufficient to support multi-service scenarios in the 5th Generation mobile communication technology (5G). On the other hand, 5G is required to adapt to different types of services, such as video services, web services and vehicle networking services, and therefore is required to support rapid launching and rapid deployment of new services.

The 5G network architecture will be driven by services, and the principles of architecture design are based on how to more flexibly and efficiently meet the needs of different services for mobile networks. Under the support of Software Defined Network (SDN) and Network Function Virtualization (NFV) technologies of underlying physical facilities, a 5G network enables a core network to be totally based on a cloud. In the latest 3GPP standards, the core network architecture for 5G is clear, and a service-oriented framework is established in a control plane.

Cloud-based software architecture is very different from traditional software architecture. The traditional software architecture is referred to as Monolithic, in which respective modules of a service system are tightly coupled with each other and run in one and the same process, the whole application process needs to be restarted for each upgrade, and if one module malfunctions, the whole system cannot be started normally. The cloud-based software structure requires that the arrangement of software is no longer a single piece of software, the software is divided into various services according to different dimensions, and the services may be subdivided into various micro-services, that is, the arrangement of the services follows so-called micro-service architecture. According to micro-service architecture, different modules in the service system are split in the form of micro-services, each micro-service is autonomous, and a standard Application Programming Interface (API) is published for each micro-service, such that the huge single process can be split into micro-processes independent of each other. The rise of container technologies promotes the development of the micro-service architecture.

With the development requirements of 5G services and networks, the software of each communication network element using the micro-service architecture becomes an inevitable trend. At present, many influential open-source micro-service architecture platforms exist in the industry, but they are all born in the Internet field. In the micro-service modification of communication software, the existing micro-service system is difficult to adapt to the communication software due to the constraints of some characteristics in the field of communication. The current popular communication methods under the micro-service architecture include modes such as Remote Procedure Call (RPC) and rabbitmq message queue, but the problems about addressing, delay, load balancing and the consistency ensuring of communication context cannot be well solved when these communication methods under the micro-service architecture are applied to the field of communication.

The Chinese Patent Application CN 108 206 852 A discloses a session-based service instance management method and device under micro service framework.

The document Chris Richardson et al. "MICROSERVICES-From Design to Deployment" proposes a solution related to "microservices" from design to deployment.

However, the above technical problem still remains unsolved.

### Summary

Embodiments of the present disclosure provide a communication method and system under micro-service architecture, which may provide a high-performance and low-delay communication scheme for communication software modified based on micro-service architecture.

The present disclosure is defined by the appended sets of claims.

### Brief Description of the Drawings

The accompanying drawings are used to provide a further understanding of the technical solution of the embodiments of the present disclosure, and constitute a part of the description. The drawings are used to explain the technical solution of the embodiments of the present disclosure together with the exemplary embodiments of the present disclosure, and do not constitute limitations to the technical solution of the embodiments of the present disclosure.
Fig. 1 is a schematic diagram of a communication system under micro-service architecture according to an embodiment of the present disclosure;
Fig. 2 is an exemplary implementation flow diagram of a communication system under micro-service architecture according to an embodiment of the present disclosure;
Fig. 3 is another exemplary implementation flow diagram of a communication system under micro-service architecture according to an embodiment of the present disclosure;
Fig. 4 is a flow chart of a communication method under micro-service architecture according to an embodiment of the present disclosure;
Fig. 5 is an exemplary flow diagram of a communication method under micro-service architecture according to an embodiment of the present disclosure;
Fig. 6 is another exemplary flow diagram of a communication method under micro-service architecture according to an embodiment of the present disclosure;
Fig. 7 is a flow chart of another communication method under micro-service architecture according to an embodiment of the present disclosure;
Fig. 8 is an exemplary flow diagram of a communication method under micro-service architecture according to an embodiment of the present disclosure;
Fig. 9 is another exemplary flow diagram of a communication method under micro-service architecture according to an embodiment of the present disclosure;
Fig. 10 is yet another exemplary flow diagram of a communication method under micro-service architecture according to an embodiment of the present disclosure;
Fig. 11 is yet another exemplary flow diagram of a communication method under micro-service architecture according to an embodiment of the present disclosure;
Fig. 12 is yet another exemplary flow diagram of a communication method under micro-service architecture according to an embodiment of the present disclosure;
Fig. 13 is a schematic diagram of a communication device according to an embodiment of the present disclosure; and
Fig. 14 is a schematic diagram of a communication server according to an embodiment of the present disclosure.

### Detailed Description of the Embodiments

The embodiments of the present disclosure will be described in detail below with reference to the accompanying drawings. It is to be noted that embodiments in the present application and characteristics in the embodiments may be combined to derive other embodiments not explicitly described.

The operations shown in the flow chart of the drawings may be executed in a computer system including, for example, a set of computer-executable instructions. Moreover, although a logical sequence is shown in the flowchart, in some cases, the operations shown or described may be performed in a sequence different from the sequence herein.

The embodiments of the present disclosure provide a communication method and system under micro-service architecture, which may be applied to a distributed communication system so as provide a high-performance and low-delay communication scheme for communication software modified based on the micro-service architecture.

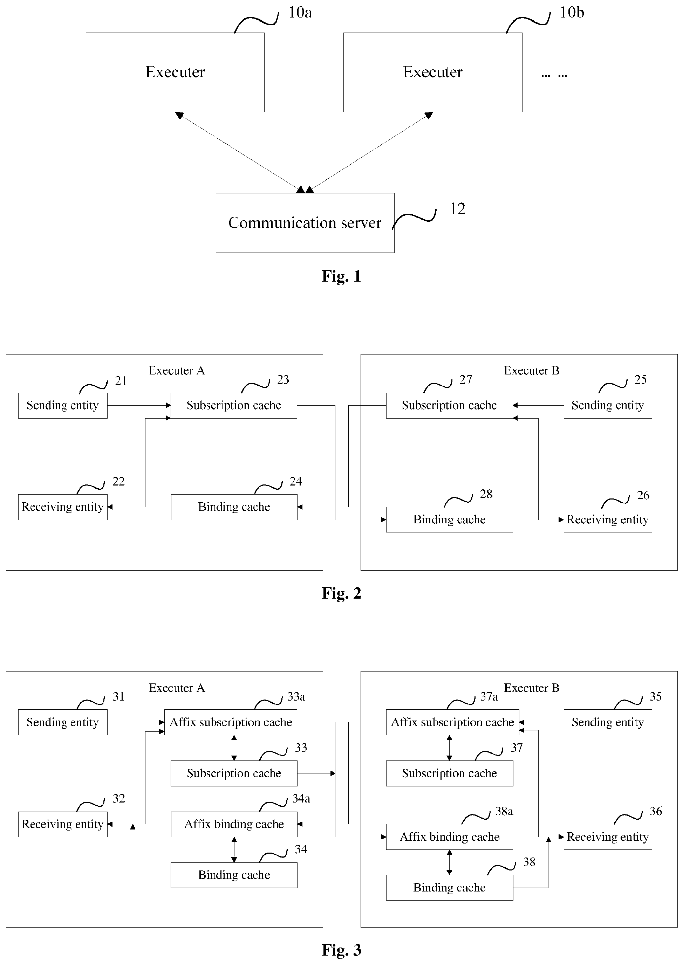

Fig. 1 is a schematic diagram of a communication system under micro-service architecture according to an embodiment of the present disclosure. As shown in Fig. 1, the communication system under the micro-service architecture provided by the present embodiment includes: a communication server 12 and at least two executers (e.g., an executer 10a and an executer 10b shown in Fig. 1).

The executer is a minimum communication unit under the micro-service architecture, and one micro-service may correspond to one or more executers. In a practical implementation, the executer may be a process or a container, but the executer is not limited to a process or a container in the embodiments of the present disclosure. In Fig. 1, for example, the executers 10a and 10b are containers, and Applications (APP) may be deployed in the executers 10a and 10b, respectively.

In the communication system, a user-initiated process may contain multiple messages, and each type of process may be abstracted into a session. In the embodiment of the present disclosure, a session may be a communication connection between micro-services, and the session may be published or subscribed to. One session may include multiple session instances. For example, the communication system is associated with a user, and multiple users may initiate the same session, i.e., a session initiated by a particular user is a session instance. The session instance may be represented in the form of a character string or an integer. If the session instance is represented in the form of a character string, formats such as "aaa.bbb.ccc" may be supported to enable richer representation. In addition, wildcard characters (such as * and >) may also be adopted in the representation, for example, aaa.bbb.*. When session instances are matched, if more wildcard characters are used, the accuracy is lower and the priority is lower; conversely, if fewer wildcard characters are used, the accuracy is higher and the priority is higher.

The session may be represented by a session type identifier, and the session may include one or more of the following attributes: a session scope (such as within a micro-service range; or within a network element range), a session load balancing rule (such as round robin, affix or broadcast), and an instance matching rule (such as exact matching; fuzzy matching).

In the present embodiment, any of the at least two executers (such as a subscriber and a publisher) is adapted to send a session register request message to the communication server and receive, from the communication server, information of a peer executer that has a session subscription and publishing relationship with the executer. The session register request message at least carries information of the executer, a session set to be registered and an attribute of any session in the session set. The executer is further adapted to subscribe to a session instance of a registered session from the communication server or the peer executer, or the executer is further adapted to receive information of a session instance, subscribed to by the peer executer, of a registered session from the communication server or the peer executer.

In an exemplary implementation, the session set to be registered may include at least one of the following: a publishable session set and a subscribable session set. One or more sessions may be included in the session set.

In an exemplary implementation, when at least two sessions are included in a session set that is registered to the communication server by any of the at least two executers, the executer may be further adapted to receive, from the communication server, information (e.g., a session type identifier of a registered session) of the registered session based on which the executer establishes a session subscription and publishing relationship with a peer executer.

In an exemplary implementation, the communication server may be adapted to determine the session subscription and publishing relationship between different executers according to the received session register request message. The communication server may analyze a session subscription and publishing relationship between different executers according to session sets to be registered carried in session register request messages of different executers, and may store the analyzed session subscription and publishing relationship.

In an exemplary implementation, the communication server may be further adapted to receive a subscription request message sent by any of the at least two executers, determine a peer executer that has a session subscription and publishing relationship with the executer, and send information of a session and a session instance subscribed to by the executer to the determined peer executer. The subscription request message carries the information of the session and the session instance subscribed to by the executer.

In an exemplary implementation, any of the at least two executers is further adapted to determine, when publishing a communication message, a peer executer receiving the communication message according to information of a session and a session instance carried in the communication message and an attribute of the session, and send the communication message to the determined peer executer.

The session capability registration process and the session instance subscription process are described below with reference to Fig. 1, taking an executer 10a as an example. In an exemplary implementation, the executer 10a may determine a publishable session set, a subscribable session set and an attribute of any session in the session set according to a preset capability description file, and then send a session register request message to the communication server 12. The session register request message may carry information about the executer 10a (e.g., communication address information such as an Internet Protocol (IP) address and a port number), a publishable session set of the executer 10a, a subscribable session set of the executer 10a, and an attribute of any session in the session set (e.g., a session load balancing rule and an instance matching rule).

After receiving the session register request message of the executer 10a, the communication server 12 can know publishable and subscribable sessions of the executer 10a by parsing the session register request message, and can know those executers (executers having completed session registration) that subscribe to or publish the same session with the executer 10a by analyzing, so as to obtain a session subscription and publishing relationship between the executer 10a and other executers, and store the analyzed session subscription and publishing relationship. Then, the communication server 12 may return a session register response (e.g., register ack) message to the executer 10a, which may carry information (e.g., a communication address of an executer 10b) of a peer executer that has a session subscription and publishing relationship with the executer 10a. When at least two sessions are included in a session set that is registered to the communication server 12 by the executer 10a, the session register response message returned by the communication server 12 to the executer 10a may carry information of a peer executer (e.g., the executer 10b) that has a session subscription and publishing relationship with the executer 10a and information (e.g., a session type identifier of a registered session) of the registered session based on which a session subscription and publishing relationship is established between the executer 10a and the peer executer.

After the executer 10a completes session capability registration, the executer 10a (e.g., as a subscriber) may send a subscription request message to the communication server 12 using a subscription (sub) interface. The subscription request message may carry information (e.g., a session type identifier and a session instance) of a session instance, subscribed to by the executer 10a, of a registered session. In other words, through the subscription request message, the executer 10a may notify the communication server 12 to subscribe the executer 10a to a certain session instance under a certain session (a certain session in the session set that has been registered to the communication server 12 by the executer 10a), i.e. to indicate that the executer needs to receive a communication message of a certain session instance under a certain session. The session type identifier (sessiontype) and the session instance (sessionInst) carried in the subscription request message may define a subscription mode. For the subscription mode, the more accurate the session instance, the higher the priority. For example, the priority of abc.123.456 is higher than that of abc.123.*, and the priority of abc.123.* is higher than that of >. Meanwhile, the executer 10a (as a subscriber, i.e. a receiver) may insert information of an entity subscribing to the session and session instance in this executer, the subscribed session type identifier and session instance into a binding cache (bindcache) of the executer 10a.

After receiving the subscription request message of the executer 10a, the communication server 12 queries the stored session subscription and publishing relationship to obtain all publishers (i.e., senders) of the session subscribed to by the executer 10a, and pushes the information of the session instance subscribed to by the executer 10a to all publishers (e.g., including the executer 10b) through a subscription notification (e.g., sub Notify) message. The communication server 12 serves only to analyze and manage the session subscription and publishing relationship of the executers, and communication messages between the executers are not transmitted through the communication server 12, but are directly transmitted between the executers. Taking the publisher of the session instance to which the executer 10b subscribes is the executer 10a as an example, the executer 10b may insert the received communication address of the executer 10a, and the information of the session and the session instance subscribed to by the executer 10a into a subscription cache (subcache) of the executer 10b.

The concepts of sessions and session instances are proposed in the present embodiment. In the process of modifying single software architecture into micro-service architecture, when a micro-service is applied to the communication system, a peer address can be conveniently found and a call instance can be conveniently located through a two-stage discovery process (including a session capability registration process and a session instance subscription process).

Fig. 2 is an exemplary implementation flow diagram of a communication system under micro-service architecture according to an embodiment of the present disclosure. In the present exemplary embodiment, executer A and executer B have completed the session capability registration process and the session instance subscription process, i.e. the discovery of both executer A and executer B is implemented, and executer A and executer B may start sending and receiving communication messages.

As shown in Fig. 2, executer A may include a subscription cache (subcache) 23 and a binding cache (bindcache) 24, and executer B may include a subscription cache (subcache) 27 and a binding cache (bindcache) 28. The subscription cache 23 of executer A may store information (e.g., communication address) of a peer executer subscribing to a session and a session instance from executer A, and information of the session and the session instance subscribed to by the peer executer. The binding cache 24 of executer A may store a matching relationship between entities in executer A and subscribed sessions and session instances, that is, the binding cache records that certain entities subscribe to certain session instances under certain sessions. The subscription cache 27 of executer B may store information of a peer executer subscribing to a session and a session instance from executer B, and information of the session and the session instance subscribed to by the peer executer. The binding cache 28 of executer B may store a matching relationship between entities in executer B and subscribed sessions and session instances.

The following takes executer A as a publisher and executer B as a subscriber as an example for description. Executer B subscribes to a session and a session instance from executer A during the subscription process. For example, the subscribed session and session instance are represented by (sessiontype, sessionInst). A subscription mode may be defined by (sessiontype, sessionInst).

When a sending entity 21 of executer A publishes a communication message, a publishing (pub) interface may be used, and (sessiontype, sessionInst) may be used as a publishing keyword. The session instance (sessionInst) may not support the wildcard characteristic. Executer A may match the subscription mode in the subscription cache 23 according to the publishing keyword. The matching process may include: according to an instance matching rule (e.g., exact matching or fuzzy matching) corresponding to the session type identifier (sessiontype) in the publishing keyword, a record matched with the publishing keyword is searched in the subscription cache (subcache). If multiple subscription modes are matched, the subscription mode with the highest priority is selected. For the subscription mode, the more accurate the session instance, the higher the priority. For example, the priority of abc.123.456 is higher than that of abc.123.*, and the priority of abc.123.* is higher than that of >. If there are multiple subscription modes with the same priority, a single subscriber (i.e., receiver) is selected according to a session load balancing rule (e.g., round robin or random) corresponding to the session type identifier (sessiontype) in the publishing keyword. In the present exemplary embodiment, taking that the selected single subscriber is executer B as an example, executer A may send a communication message to executer B.

After receiving the communication message, executer B may parse out the information of the session and the session instance, such as sessiontype and sessionInst, from a message header. Then, executer B matches the subscription mode in the binding cache 28, selects a single receiving entity (e.g., receiving entity 26), and delivers the received communication message to the selected receiving entity. Executer B may select a single receiving entity in the binding cache 28 to receive the communication message according to a locally preset selection rule (e.g., round robin or random). The embodiments of the present disclosure do not limit the specific selection rule.

Similarly, when executer B serves as a publisher (for example, a sending entity 25 publishes a communication message) and executer A serves as a receiver (for example, a receiving entity 22 receives the communication message), the transmission process of the communication message may refer to the above process. Therefore, the description will be omitted herein.

In the present embodiment, by setting an attribute of a session, a receiver may be matched during the sending process of a communication message, thereby optimizing load balancing, without the need for upper-layer service to consider the range control of message communication, load balancing of message communication, and message representation, which greatly reduces the complexity of the upper-layer service. In the process of elastic scaling of micro-services, the service only needs to focus on the rule, and the actual implementation is transparent to the service.

Fig. 3 is another exemplary implementation flow diagram of a communication system under micro-service architecture according to an embodiment of the present disclosure. In the present exemplary embodiment, executer A and executer B have completed the session capability registration process and the session instance subscription process, i.e. the discovery of both executer A and executer B is implemented, and executer A and executer B may start sending and receiving communication messages.

Executer A may include the following four caches: a subscription cache 33, a binding cache 34, an affix subscription cache (subcacheAff) 33a, and an affix binding cache (bindcacheAff) 34a. The affix subscription cache 33a corresponds to the subscription cache 33 and points to an executer (e.g., executer B). The affix binding cache 34a corresponds to the binding cache 34 and points to an entity in an executer (e.g., a receiving entity 32 in executer A). Executer B may include the following four caches: a subscription cache 37, a binding cache 38, an affix subscription cache (subcacheAff) 37a, and an affix binding cache (bindcacheAff) 38a.

The subscription cache 33 of executer A may store information (e.g., communication address) of a peer executer subscribing to a session and a session instance from executer A, and information (e.g., sessiontype and sessionInst) of the session and the session instance subscribed to by the peer executer. The binding cache 34 of executer A may store a matching relationship between entities in executer A and subscribed sessions and session instances, that is, the binding cache records that certain entities subscribe to certain session instances under certain sessions. The subscription cache 37 of executer B may store information of a peer executer subscribing to a session and a session instance from executer B, and information of the session and the session instance subscribed to by the peer executer. The binding cache 38 of executer B may store a matching relationship between entities in executer B and subscribed sessions and session instances.

The following takes executer A as a publisher and executer B as a subscriber as an example for description. Executer B subscribes to a session and a session instance from executer A during the subscription process. For example, the subscribed session and session instance are represented by (sessiontype, sessionInst). A subscription mode may be defined by (sessiontype, sessionInst).

When a sending entity 31 of executer A publishes a communication message, a publishing (pub) interface may be used, and (sessiontype, sessionInst) may be used as a publishing keyword. Executer A may first match the subscription mode in the affix subscription cache 33a according to the publishing keyword. If a peer executer matched with the publishing keyword is found in the affix subscription cache 33a, a communication message is directly sent to the matched peer executer. If no matched peer executer is found in the affix subscription cache 33a, a peer executer matched with the publishing keyword is searched in the subscription cache 33.

In the present exemplary embodiment, a case where executer A cannot match the subscription mode in the affix subscription cache 33a is taken as an example for description. Executer A uses (sessiontype, sessionInst) carried in the communication message as the publishing keyword, and performs subscription mode matching in the subscription cache 33 according to an instance matching rule corresponding to sessiontype, and obtains a subscriber set (i.e., a set of peer executers). Then, executer A selects a single subscriber (e.g., executer B) from the matched subscriber set according to a session load balancing rule (e.g., round robin or random) corresponding to sessiontype, and sends a communication message to the selected subscriber. Meanwhile, executer A generates an affix record in the affix subscription cache 33a, which records the selected subscriber information (subInfo) (e.g., a communication address of executer B), and information of a session and a session instance. For example, the above pieces of information are recorded in the affix subscription cache 33a in the form of (subInfo, sessiontype, sessionInst).

After executer B (subscriber) receives a communication message, (sessiontype, sessionInst) carried in the communication message is taken as a keyword to search for a matched entity in the affix binding cache 38a. If the entity is found, the message is delivered to the found entity (i.e., an upper-layer entity in executer B). If no matched entity is found, the binding cache 38 is searched for a matched entity. Executer B may select a single receiving entity in the binding cache 38 to receive the communication message according to a locally preset selection rule (e.g., round robin or random). The embodiments of the present disclosure do not limit the specific selection rule.

In the present exemplary embodiment, a case where executer B cannot find the matched entity in the affix subscription cache 38a is taken as an example for description. Executer B uses (sessiontype, sessionInst) carried in the communication message as a keyword to match a subscription mode in the binding cache 38, selects a single receiving entity (e.g., receiving entity 36) in executer B, and delivers the communication message to the selected receiving entity. Meanwhile, executer B generates an affix record pointing to the selected receiving entity 36 in the affix binding cache 38a, that is, adds a matching relationship between the selected receiving entity 36 and the session and session instance to the affix binding cache 38a. In the present exemplary embodiment, executer B (subscriber) may also insert a communication address of executer A sending the communication message, and the information of the session and the session instance carried in the communication message as an affix record into the affix subscription cache 37a of executer B. For example, the above pieces of information are recorded in the affix subscription cache 37a in the form of (pubInfo (communication address of executer A), sessiontype, sessionInst). Then, if executer B needs to return the communication message to executer A, executer B may directly query the affix subscription cache 37a of executer B to find executer A, and directly send the communication message to executer A.

Similarly, when executer B serves as a publisher (for example, a sending entity 35 publishes a communication message) and executer A serves as a receiver (for example, a receiving entity 32 receives the communication message), the transmission process of the communication message may refer to the above process. Therefore, the description will be omitted herein.

In the present embodiment, an affix mechanism not only supports the communication decoupling between micro-services, but also associates the session instance with a related message sequence, so that the user context in the user-level communication keeps consistent in the message interaction process within a certain period of time.

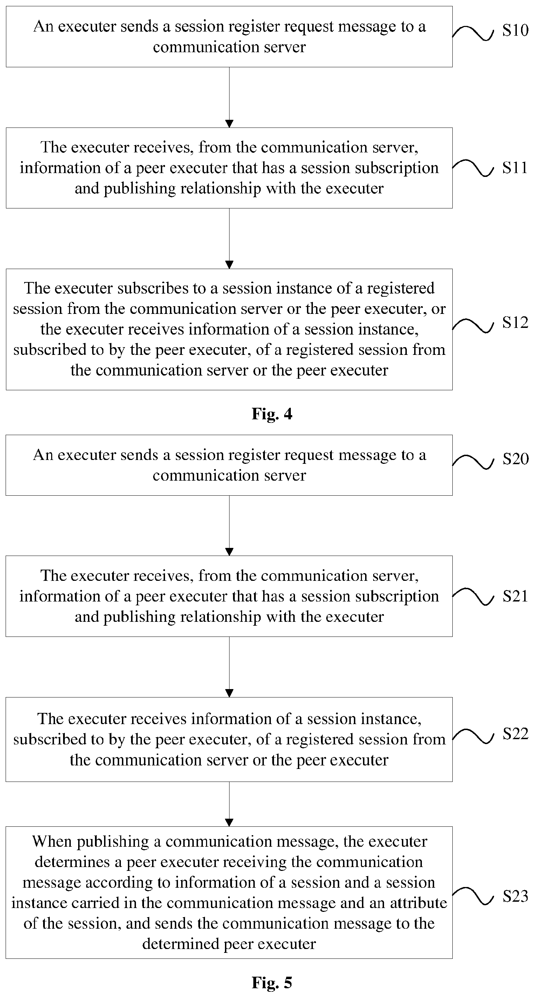

Fig. 4 is a flow chart of a communication method under micro-service architecture according to an embodiment of the present disclosure. The communication method provided by the present embodiment may be implemented by an executer. The description of the executer, sessions, and session instances may refer to the description in the embodiments for the above communication system, and will not be repeated herein.

As shown in Fig. 4, the communication method under the micro-service architecture provided by the present embodiment includes the following operations S10 to S12.

In operation S10, an executer sends a session register request message to a communication server. The session register request message at least carries information of the executer, a session set to be registered and an attribute of any session in the session set.

In operation S11, the executer receives, from the communication server, information of a peer executer that has a session subscription and publishing relationship with the executer.

In operation S12, the executer subscribes to a session instance of a registered session from the communication server or the peer executer, or the executer receives information of a session instance, subscribed to by the peer executer, of a registered session from the communication server or the peer executer.

In the present embodiment, the executer completes the session capability registration through operations S10 and S11, and completes the session instance subscription process through operation S12. Through the session capability registration process and the instance subscription process, the executer may discover the peer executer and locate the session instance, and then the executer may directly transmit messages with the found peer executer.

When the executer serves as a subscriber, in operation S12, the executer may subscribe to a session instance of a registered session from the communication server or the peer executer. When the executer serves as a publisher, in operation S12, the executer may receive information of a session instance, subscribed to by the peer executer, of a registered session from the communication server or the peer executer.

In an exemplary implementation, the operation that the executer subscribes to a session instance of a registered session from the communication server or the peer executer in operation S12 may include:
the executer sends a subscription request message to the communication server, wherein the subscription request message carries information of a session and a session instance subscribed to by the executer, and the communication server sends the information of the session and the session instance subscribed to by the executer to the peer executer; or,
the executer broadcasts a subscription request message to the peer executer, wherein the subscription request message carries information of a session and a session instance subscribed to by the executer.

In an exemplary implementation, after operation S 10, the communication method provided by the present embodiment may further include: the executer receives, from the communication server, information of a registered session based on which the session subscription and publishing relationship is established between the executer and the peer executer. For example, when at least two sessions are included in a session set that is registered to the communication server by the executer, the communication server may return the following information to the executer: information of a peer executer that has a session subscription and publishing relationship with the executer, and information (e.g., a session type identifier of a registered session) of the registered session based on which the executer establishes a session subscription and publishing relationship with the peer executer.

In an exemplary implementation, after operation S12, the communication method provided by the present embodiment may further include: when publishing a communication message, the executer determines a peer executer receiving the communication message according to information of a session and a session instance carried in the communication message and an attribute of the session, and sends the communication message to the determined peer executer.

In an exemplary implementation, after operation S12, the communication method provided by the present embodiment may further include: after receiving a communication message, the executer determines an entity receiving the communication message in the executer according to information of a session and a session instance carried in the communication message, and delivers the communication message to the determined entity.

Fig. 5 is an exemplary flow diagram of a communication method under micro-service architecture according to an embodiment of the present disclosure. In the present embodiment, an executer as a publisher (i.e., sender) of a communication message is taken as an example for description. As shown in Fig. 5, the communication method under the micro-service architecture provided by the present embodiment includes the following operations S20 to S23.

In operation S20, an executer sends a session register request message to a communication server. The session register request message at least carries information of the executer, a session set to be registered and an attribute of any session in the session set.

In operation S21, the executer receives, from the communication server, information of a peer executer that has a session subscription and publishing relationship with the executer.

In operation S22, the executer receives information of a session instance, subscribed to by the peer executer, of a registered session from the communication server or the peer executer.

In operation S23, when publishing a communication message, the executer determines a peer executer receiving the communication message according to information of a session and a session instance carried in the communication message and an attribute of the session, and sends the communication message to the determined peer executer.

In an exemplary implementation, the executer may include a subscription cache for storing information of a peer executer subscribing to a session instance of a registered session from the executer, and information of the session and the session instance subscribed to by the peer executer.

In operation S23, the operation that the peer executer receiving the communication message is determined according to the information of the session and the session instance carried in the communication message and the attribute of the session may include: the executer selects a peer executer subscribing to the session and the session instance from the subscription cache according to the information of the session and the session instance carried in the communication message and the attribute of the session as the peer executer receiving the communication message.

In an exemplary implementation, the executer may further include an affix subscription cache. After selecting the peer executer subscribing to the session and the session instance from the subscription cache as the peer executer receiving the communication message, the communication method of the present embodiment may further include: a matching relationship between the information of the session and the session instance carried in the communication message and the peer executer is added to the affix subscription cache.

In an exemplary implementation, in operation S23, the operation that the peer executer receiving the communication message is determined according to the information of the session and the session instance carried in the communication message and the attribute of the session may include: the executer searches for a peer executer matched with the information of the session and the session instance carried in the communication message from the affix subscription cache; in a case of finding a matched peer executer from the affix subscription cache, the executer determines the found peer executer as the peer executer receiving the communication message; and in a case of not finding the matched peer executer from the affix subscription cache, the executer selects a peer executer subscribing to the session and the session instance from the subscription cache according to the information of the session and the session instance carried in the communication message and the attribute of the session as the peer executer receiving the communication message.

In an exemplary implementation, the attribute of the session may include: a session load balancing rule and an instance matching rule. The operation that the peer executer subscribing to the session and the session instance is selected from the subscription cache according to the information of the session and the session instance carried in the communication message and the attribute of the session as the peer executer receiving the communication message may include: peer executers subscribing to the session and the session instance are searched from the subscription cache according to the instance matching rule of the session carried in the communication message, and one of the found peer executers is selected as the peer executer receiving the communication message according to the session load balancing rule of the session. However, the embodiment of the present disclosure is not limited to the above implementation. In other implementations, the attribute of the session may include: a session load balancing rule or an instance matching rule. For example, when the executer searches for the peer executer from the subscription cache, a peer executer may be selected to receive the communication message according to the session load balancing rule or the instance matching rule.

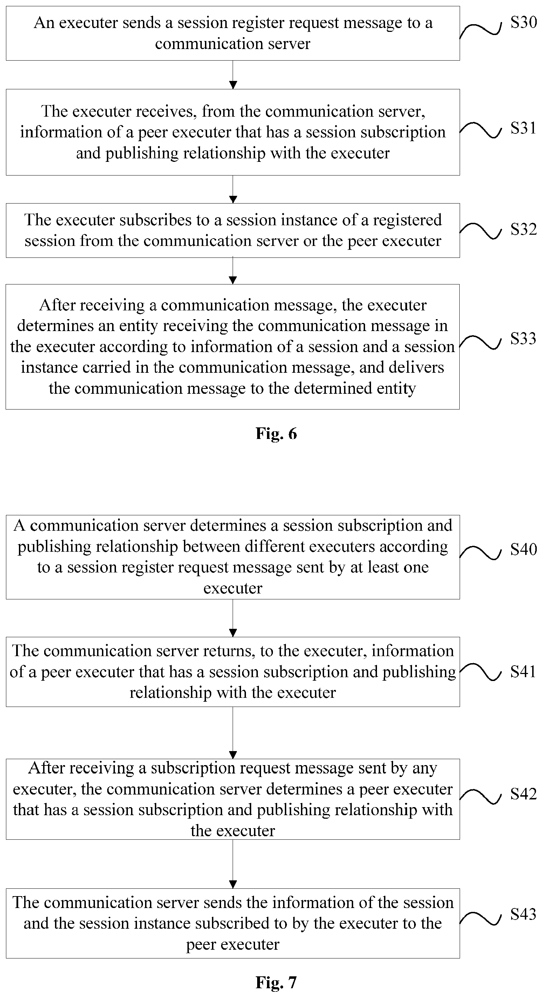

Fig. 6 is another exemplary flow diagram of a communication method under micro-service architecture according to an embodiment of the present disclosure. In the present embodiment, an executer as a subscriber (i.e., receiver) of a communication message is taken as an example for description. As shown in Fig. 6, the communication method under the micro-service architecture provided by the present embodiment includes the following operations S30 to S33.

In operation S30, an executer sends a session register request message to a communication server. The session register request message at least carries information of the executer, a session set to be registered and an attribute of any session in the session set.

In operation S31, the executer receives, from the communication server, information of a peer executer that has a session subscription and publishing relationship with the executer.

In operation S32, the executer subscribes to a session instance of a registered session from the communication server or the peer executer.

In operation S33, after receiving a communication message, the executer determines an entity receiving the communication message in the executer according to information of a session and a session instance carried in the communication message, and delivers the communication message to the determined entity.

In an exemplary implementation, the executer may include a binding cache for storing a matching relationship between an entity in the executer and a session and a session instance subscribed to by the entity in the executer.

The operation that the entity receiving the communication message in the executer is determined according to the information of the session and the session instance carried in the communication message may include: the executer searches for entities subscribing to the session and the session instance from the binding cache according to the information of the session and the session instance carried in the communication message, and selects one of the found entities as the entity receiving the communication message.

In an exemplary implementation, the executer may further include an affix binding cache. After searching for the entities subscribing to the session and the session instance from the binding cache according to the information of the session and the session instance carried in the communication message and selecting one of the found entities as the entity receiving the communication message, the communication method of the present embodiment may further include: the executer adds a matching relationship between the selected entity in the binding cache and the session and the session instance to the affix binding cache as an affix record.

In an exemplary implementation, the operation that the entity receiving the communication message in the executer is determined according to the information of the session and the session instance carried in the communication message may include: after receiving a communication message carrying information of a session and a session instance, the executer searches for an entity matched with the session and the session instance from the affix binding cache; in a case of finding a matched entity from the affix binding cache, the executer determines the found entity as the entity receiving the communication message; and in a case of not finding the matched entity from the affix binding cache, the executer searches for entities subscribing to the session and the session instance from the binding cache according to the information of the session and the session instance carried in the communication message, and selects one of the found entities as the entity receiving the communication message.

In an exemplary implementation, the executer may further include an affix subscription cache. After the executer adds the matching relationship between the selected entity in the binding cache and the session and the session instance to the affix binding cache, the communication method of the present embodiment may further include: the executer adds a matching relationship between the information of the session and the session instance carried in the communication message and the peer executer sending the communication message to the affix subscription cache as an affix record in the affix subscription cache; and in a case where the number of affix records related to the session in the affix subscription cache is greater than a preset affix quota, the executer clears the affix records related to the session in the affix subscription cache and the affix binding cache, and notifies the peer executer to clear affix records related to the session.

Fig. 7 is a flow chart of another communication method under micro-service architecture according to an embodiment of the present disclosure. The communication method provided by the present embodiment may be implemented by a communication server. The description of the executer, sessions, and session instances may refer to the description in the above communication system, and will not be repeated herein.

As shown in Fig. 7, the communication method under the micro-service architecture provided by the present embodiment includes the following operations S40 to S43.

In operation S40, a communication server determines a session subscription and publishing relationship between different executers according to a session register request message sent by at least one executer. The session register request message at least carries information of the executer, a session set to be registered and an attribute of any session in the session set.

In operation S41, the communication server returns, to the executer, information of a peer executer that has a session subscription and publishing relationship with the executer.

In operation S42, after receiving a subscription request message sent by any executer, the communication server determines a peer executer that has a session subscription and publishing relationship with the executer. The subscription request message carries information of a session and a session instance subscribed to by the executer.

In operation S43, the communication server sends the information of the session and the session instance subscribed to by the executer to the peer executer.

In an exemplary implementation, after operation S40, the communication method provided by the present embodiment may further include: the communication server returns information of a registered session based on which the session subscription and publishing relationship is established between the executer and the peer executer to any executer.

In an exemplary implementation, the attribute of the session may include at least one of the following: a session load balancing rule and an instance matching rule.

The communication method and system under the micro-service architecture provided by the embodiment of the present disclosure will be described below through multiple exemplary embodiments.

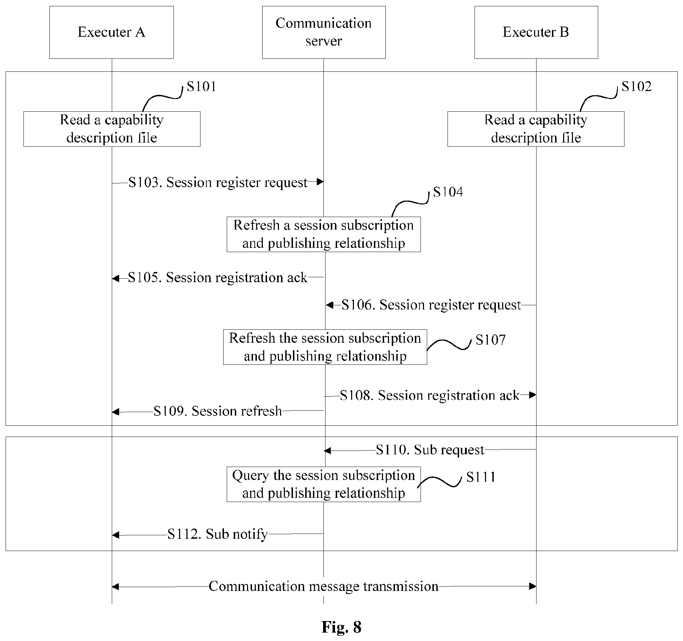

Fig. 8 is an exemplary flow diagram of a communication method under micro-service architecture according to an embodiment of the present disclosure. The present exemplary embodiment describes a session capability registration process and a subscription mode of a session instance.

As shown in Fig. 8, the communication method under the micro-service architecture provided by the present embodiment includes operations S101 to S 112.

In operation S101, when powered on and initialized, executer A reads a pre-configured capability description file. The capability description file may be in a JavaScript Object Notation (json) format.

For example, the capability description file of executer A may include the following content:

```
    "Session"
    {
        "pub":[]
             {
                 Sessiontype: "XYZ" //the session type identifier is XYZ
              }
          "sub": []
              {
                   Sessiontype: "XYZ" //the session type identifier is XYZ
    }
    
```

Attributes of a session in a publishing (pub) capability are as follows:

```
Sessiontype:
    {
                                 Type: "XYZ"//the session type identifier is XYZ
                                 Scope: "IN NF"//the session scope is a micro-service range
                                 LbRule:"ROUNDROBIN"//the session load balancing rule is
                                 round robin
                                }
```

In operation S102, when powered on and initialized, executer B reads a pre-configured capability description file. The capability description file may be in a json format.

For example, the capability description file of executer B may include the following content:

```
       "Session"
    {
        "pub":[]
             {
                 Sessiontype: "XYZ" //the session type identifier is XYZ
                }
          "sub": []
              {
                 Sessiontype: "XYZ" //the session type identifier is XYZ
               }
    }
    Sessiontype:
    {
                                 Type: "XYZ"//the session type identifier is XYZ
                                 Scope: "IN NF"//the session scope is a micro-service range
                                 LbRule:"ROUNDROBIN"//the session load balancing rule is
                                 round robin
    }
```

The embodiments of the present disclosure do not limit the sequence of operations S101 and S102.

In operation S103, executer A sends a session register request (register request) message to a communication server, which may carry a communication address of executer A (for example, the communication address of executer A may include an IP address and a port number (PORT)), a subscribable session (e.g., session XYZ), a publishable session (e.g., session XYZ), and an attribute of session XYZ.

In operation S104, after receiving the session register request message of executer A, the communication server searches for a session subscription and publishing relationship stored in the communication server.

In the present embodiment, because there is no other executer in a registered state at this time, executer A has no associated executers, that is, there is no peer executer. The communication server may store information carried in the session register request message of executer A, and refresh the stored session subscription and publishing relationship.

In operation S105, the communication server returns a session register response (e.g., register ack) message to executer A.

In operation S106, executer B sends a session register request message to a communication server, which may carry a communication address of executer B (the communication address of executer B may include an IP address and a port number), a publishable session (e.g., session XYZ), a subscribable session (e.g., session XYZ), and an attribute of session XYZ.

In operation S107, after receiving the session register request message of executer B, the communication server stores the information carried in the session register request message, and searches for a session subscription and publishing relationship. In the present embodiment, the communication server finds that executer A has the publishing capability of session XYZ and executer B has the subscription capability of session XYZ, the session subscription and publishing relationship between executer A and executer B based on session XYZ may be determined, and then the stored session subscription and publishing relationship may be refreshed.

In operation S108, the communication server returns a register response message (e.g., register ack) to executer B. The register response message may carry the communication address of executer A.

In the present embodiment, executer A and executer B have registered a session respectively. Therefore, the communication server only needs to return the communication address of executer A to executer B, and executer B can know that a session subscription and publishing relationship exists between executer B and executer A based on the registered session XYZ.

In other embodiments, when executer B has registered multiple sessions, the communication server needs to return the communication address of executer A to executer B and information of a session (e.g., session type identifier) having a relationship with executer A. Thus, executer B can know that a session subscription and publishing relationship exists between executer B and executer A based on a certain registered session.

In operation S109, after the registration process of executer B is completed, the communication server needs to push a communication address of executer B to executer A immediately. In the present embodiment, the communication server may send a session refresh message to executer A, so that executer A knows the communication address of executer B.

Through the above operations, the session capability registration process of executer A and executer B in the communication server is completed.

In operation S110, assuming that executer B is a receiver and a certain receiving entity in executer B needs to subscribe to a certain session instance, executer B may call a subscription interface to send a subscription request (e.g., sub request) message to the communication server, and the subscription request message may carry a session type identifier and one or more session instances to be subscribed to by the receiving entity.

In operation S111, after receiving the subscription request message of executer B, the communication server queries the stored session subscription and publishing relationship to obtain a communication address of a peer executer (i.e., executer A) of executer B.

In operation S112, the communication server pushes the information of a session instance to be subscribed to by executer B to executer A through a subscription notification (e.g., sub notify) message. After receiving the subscription notification message from the communication server, executer A records the information of the session instance to be subscribed to by executer B in a subscription cache of executer A.

Through the above process, the session capability registration and the session instance subscription are completed, and communication messages can be transmitted between executer A and executer B.

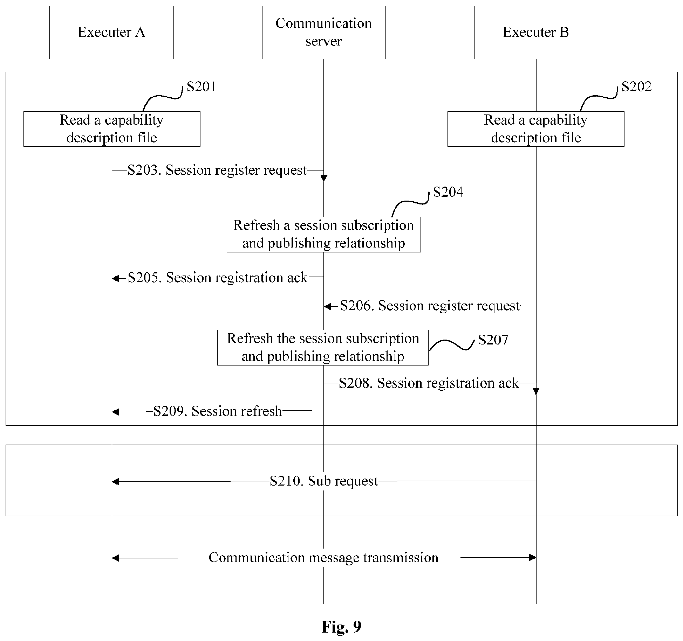

Fig. 9 is another exemplary flow diagram of a communication method under micro-service architecture according to an embodiment of the present disclosure. The present exemplary embodiment describes a session capability registration process and another subscription mode of a session instance.

As shown in Fig. 9, the communication method under the micro-service architecture provided by the present embodiment includes operations S201 to S210.

In operation S201, when powered on and initialized, executer A reads a pre-configured capability description file. The capability description file may be in a json format.

For example, the capability description file of executer A may include the following content:

```
    "Session"
    {
        "pub":[]
             {
                 Sessiontype: "XYZ" //the session type identifier is XYZ
              }
          "sub": []
              {
                   Sessiontype: "XYZ" //the session type identifier is XYZ
                  }
    }
```

Attributes of a session in a publishing (pub) capability are as follows:

```
    Sessiontype:
    {
                                 Type: "XYZ"//the session type identifier is XYZ
                                 Scope: "IN NF"//the session scope is a micro-service range
                                 LbRule:"ROUNDROBIN"//the session load balancing rule is
                                 round robin
                                }
    
```

In operation S102, when powered on and initialized, executer B reads a pre-configured capability description file. The capability description file may be in a json format.

For example, the capability description file of executer B may include the following content:

```
       "Session"
    {
        "pub":[]
             {
                 Sessiontype: "XYZ" //the session type identifier is XYZ
          "sub": []
              {
                 Sessiontype: "XYZ" //the session type identifier is XYZ
               }
    }
    Sessiontype:
    {
                                 Type: "XYZ"//the session type identifier is XYZ
                                 Scope: "IN NF"//the session scope is a micro-service range
                                 LbRule:"ROUNDROBIN"//the session load balancing rule is
                                 round robin
    }
```

The embodiments of the present disclosure do not limit the sequence of operations S201 and S202.

In operation S203, executer A sends a session register request (register request) message to a communication server. The register request message may carry a communication address of executer A (for example, the communication address of executer A includes an IP address and a port number), a subscribable session (e.g., session XYZ), a publishable session (e.g., session XYZ), and an attribute of session XYZ.

In operation S204, after receiving the session register request message of executer A, the communication server searches for a session subscription and publishing relationship stored in the communication server.

In the present embodiment, because there is no other executer in a registered state at this time, executer A has no associated executers, that is, there is no peer executer. The communication server may store information carried in the session register request message of executer A, and refresh the stored session subscription and publishing relationship.

In operation S205, the communication server returns a session register response (e.g., register ack) message to executer A.

In operation S206, executer B sends a session register request message to a communication server, which may carry a communication address of executer B (the communication address of executer B may include an IP address and a port number), a publishable session (e.g., session XYZ), a subscribable session (e.g., session XYZ), and an attribute of session XYZ.

In operation S207, after receiving the session register request message of executer B, the communication server stores the information carried in the session register request message of executer B, and searches for a session subscription and publishing relationship. In the present embodiment, the communication server finds that executer A has the publishing capability of session XYZ and executer B has the subscription capability of session XYZ, the session subscription and publishing relationship between executer A and executer B based on session XYZ may be determined, and then the session subscription and publishing relationship may be refreshed.

In operation S208, the communication server returns a session register response (e.g., register ack) message to executer B. The session register response message may carry the communication address of executer A.

In operation S209, after the registration process of executer B is completed, the communication server needs to push a communication address of executer B to executer A immediately. In the present embodiment, the communication server may send a session refresh message to executer A, so that executer A knows the communication address of executer B.

Through the above operations, the session capability registration process of executer A and executer B in the communication server is completed.

In operation S210, assuming that executer B is a receiver and a certain receiving entity in executer B needs to subscribe to a certain session instance, since executer B has known all peer executers (including executer A) related to executer B through the registration process, executer B may directly broadcast a subscription request (e.g., sub request) message to all the related peer executers (i.e., not through the communication server). The subscription request message may carry a session type identifier (sessiontype) and one or more session instances (sessionInst) to be subscribed to by the receiving entity.

After receiving the subscription notification message from the communication server, executer A records the information of the session instance to be subscribed to by executer B in a subscription cache of executer A.

Through the above process, the session capability registration and the session instance subscription are completed, and communication messages can be transmitted between executer A and executer B.

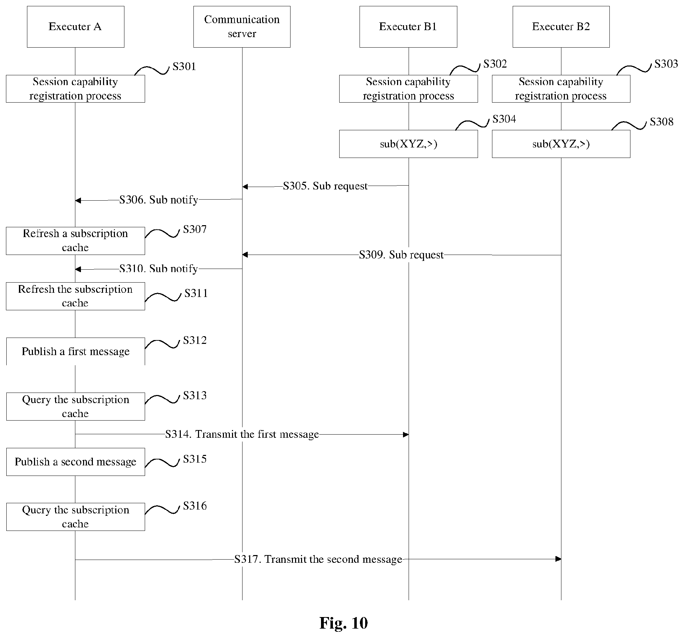

Fig. 10 is another exemplary flow diagram of a communication method under micro-service architecture according to an embodiment of the present disclosure. In the present exemplary embodiment, the executer is not provided with an affix subscription cache, the attribute of the session registered by the executer includes a session load balancing rule, and the session load balancing rule is round robin.

As shown in Fig. 10, the communication method under the micro-service architecture provided by the present embodiment includes operations S301 to S317.

In operation S301, executer A performs a session capability registration process.

In operation S302, executer B1 performs a session capability registration process.

In operation S303, executer B2 performs a session capability registration process.

It should be noted that the session capability registration process of executer A, executer B1 and executer B2 may refer to the description of operations S101 to S109 in Fig. 8, so the description will be omitted herein. Moreover, the embodiments of the present disclosure do not limit the sequence of operations S301, S302 and S303.

In operation S304, after the registration of executer B1 is completed, entity workB1_1 in executer B1 calls a subscription interface, sub(XYZ,>), where the subscribed session instance is >, which means that entity workB 1_1 may receive messages from any session instance under session XYZ. Moreover, executer B1 refreshes the binding cache of executer B 1, that is, records a correspondence between entity workB1_1, session XYZ and the session instance in the binding cache.

In operation S305, executer B1 sends a subscription request message to the communication server, which carries information of a session and a session instance to be subscribed to by executer B1, such as (XYZ, >).

In operation S306, after receiving the subscription request message of executer B1, the communication server queries a session subscription and publishing relationship according to a session type identifier XYZ, finds that there is a related sender, i.e., executer A, sends a subscription notification (e.g., sub notify) message to executer A, and pushes the information (such as a communication address) of executer B1 and the information of the session and the session instance to be subscribed to by executer B1, such as in the format of (XYZ, >, B1), to executer A.

In operation S307, after receiving the subscription notification message, executer A records executer B1 and session XYZ and a session instance subscribed to by executer B1 in the subscription cache of executer A.

In operation S308, after the registration of executer B2 is completed, entity workB2_1 in executer B2 calls a subscription interface, sub(XYZ,>), where the subscribed session instance is >, which means that entity workB2_1 may receive messages from any session instance under session XYZ. Moreover, executer B2 refreshes the binding cache of executer B2, that is, records a correspondence between entity workB2_1, session XYZ and the session instance in the binding cache.

In operation S309, executer B2 sends a subscription request message to the communication server, which carries information of a session and a session instance to be subscribed to by executer B2, such as (XYZ, >).

In operation S310, after receiving the subscription request message of executer B2, the communication server queries a session subscription and publishing relationship according to a session type identifier XYZ, finds that there is a related sender, i.e., executer A, sends a subscription notification (e.g., sub notify) message to executer A, and pushes the information (such as a communication address) of executer B2 and the information of the session and the session instance to be subscribed to by executer B2, such as in the format of (XYZ, >, B2), to executer A.

In operation S311, after receiving the subscription notification message, executer A records executer B2 and session XYZ and a session instance subscribed to by executer B2 in the subscription cache of executer A.

In operation S312, entity workA_1 in executer A calls a publishing interface to publish a first message, such as pub(XYZ, abc.123, msgdata1).

In operation S313, executer A queries a subscription cache according to the information (XYZ, abc.123) of the session and session instance carried in the publishing interface. Since the session instances subscribed to by executers B1 and B2 are >, it is only required to match the session type identifier XYZ, and executer A can find two subscribers in the subscription cache, i.e., executer B1 and executer B2. Since the session load balancing rule of session XYZ is a round robin rule, executer A may select executer B1 as a peer executer.

In operation S314, executer A sends the first message to executer B1 through a socket interface.

In operation S315, entity workA_1 in executer A calls the publishing interface to publish a second message, such as pub(XYZ, abc.456, msgdata2).

In operation S316, executer A queries a subscription cache according to the information (XYZ, abc.456) of the session and session instance carried in the publishing interface. Since the session instances subscribed to by executers B1 and B2 are >, it is only required to match the session type identifier XYZ, and executer A can find two subscribers in the subscription cache, i.e., executer B1 and executer B2. Since the session load balancing rule is a round robin rule and executer A has selected executer B1 in operation S313, executer A may select executer B2 as a peer executer at this time.

In operation S317, executer A sends the second message to executer B2 through the socket interface.

It should be noted that, in the present embodiment, the sequence in which executer B1 and executer B2 subscribe to the session instance is not limited.

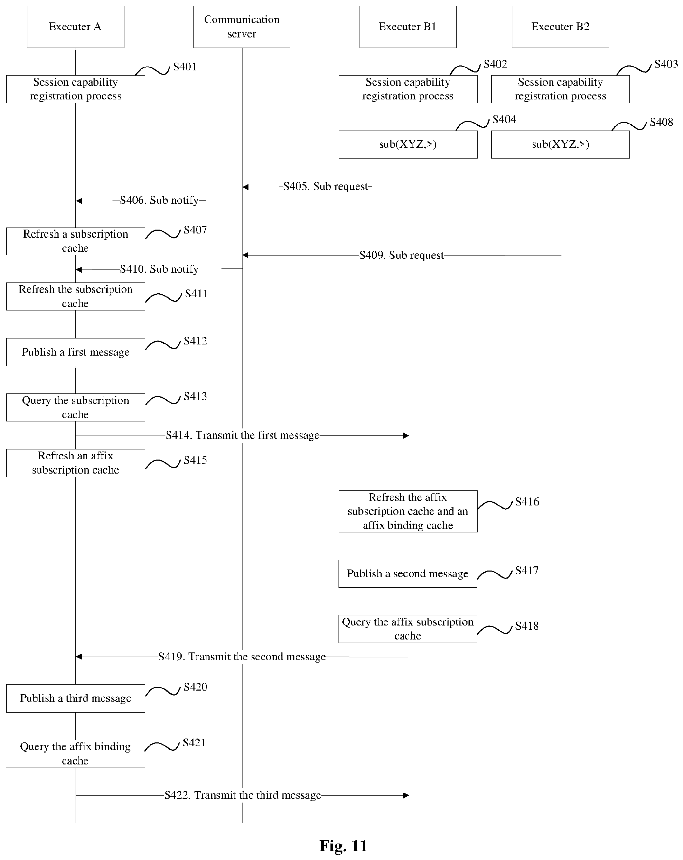

Fig. 11 is another exemplary flow diagram of a communication method under micro-service architecture according to an embodiment of the present disclosure. In the present exemplary embodiment, the executer includes an affix subscription cache and an affix binding cache.

In the present exemplary embodiment, the capability description files of executer A and executers B1 and B2 may be in a json format.

For example, the capability description file of executer A may include:

```
    "Session"
    {
        "pub":[]
             {
                 Sessiontype: "XYZ" //the session type identifier is XYZ
              }
          "sub": []
              {
                   Sessiontype: "XYZ" //the session type identifier is XYZ
                  }
    }
    Sessiontype:
    {
                                 Type: "XYZ"//the session type identifier is XYZ
                                 Scope: "IN NF"//the session scope is a micro-service range
                                 LbRule:"ROUNDROBIN"//the session load balancing rule is
                                 round robin and affix
                                }
```

For example, the capability description files of executers B1 and B2 may respectively include:

```
       "Session"
    {
        "pub":[]
             {
                 Sessiontype: "XYZ" //the session type identifier is XYZ
                }
          "sub": []
              {
                 Sessiontype: "XYZ" //the session type identifier is XYZ
               }
    }
    Sessiontype:
    {
                                 Type: "XYZ"//the session type identifier is XYZ
                                 Scope: "IN NF"//the session scope is a micro-service range
                                 LbRule:"ROUNDROBIN"//the session load balancing rule is
                                 round robin and affix
    }
```

As shown in Fig. 11, the communication method under the micro-service architecture provided by the present embodiment includes operations S401 to S422.

In operation S401, executer A performs a session capability registration process.

In operation S402, executer B1 performs a session capability registration process.

In operation S403, executer B2 performs a session capability registration process.

It should be noted that the session capability registration process of executer A, executer B1 and executer B2 may refer to the description of operations S101 to S109 in Fig. 8, so the description will be omitted herein. Moreover, the embodiments of the present disclosure do not limit the sequence of operations S401, S402 and S403.

In operation S404, after the registration of executer B1 is completed, entity workB1_1 in executer B1 calls a subscription interface, sub(XYZ,>), where the subscribed session instance is >, which means that entity workB 1_1 may receive messages from any session instance under session XYZ. Moreover, executer B1 refreshes the binding cache of executer B 1, that is, records a correspondence between entity workB1_1, session XYZ and the session instance in the binding cache.

In operation S405, executer B1 sends a subscription request message to the communication server, which carries information of a session and a session instance to be subscribed to by executer B1, such as (XYZ, >).

In operation S406, after receiving the subscription request message of executer B1, the communication server queries a session subscription and publishing relationship according to a session type identifier XYZ, and finds that there is a related sender, i.e., executer A. Then, the communication server sends a subscription notification (e.g., sub notify) message to executer A, and pushes the information (such as a communication address) of executer B1 and the information of the session and the session instance to be subscribed to by executer B1, such as (XYZ, >, B1), to executer A.

In operation S407, after receiving the subscription notification message, executer A records executer B1 and session XYZ and a session instance subscribed to by executer B1 in the subscription cache of executer A.

In operation S408, after the registration of executer B2 is completed, entity workB2_1 in executer B2 calls a subscription interface, sub(XYZ,>), where the subscribed session instance is >, which means that entity workB2_1 may receive messages from any session instance under session XYZ. Moreover, executer B2 refreshes the binding cache of executer B2, that is, records a correspondence between entity workB2_1, session XYZ and the session instance in the binding cache.

In operation S409, executer B2 sends a subscription request message to the communication server, which carries information of a session and a session instance to be subscribed to by executer B1, such as (XYZ, >).

In operation S410, the communication server receives the subscription request message of executer B2, queries a session subscription and publishing relationship according to a session type identifier XYZ, finds that there is a related sender, i.e., executer A, sends a subscription notification message (e.g., sub notify) to executer A, and pushes the information (such as a communication address) of executer B2 and the information of the session and the session instance to be subscribed to by executer B2, such as in the format of (XYZ, >, B2), to executer A.

In operation S411, after receiving the subscription notification message, executer A records executer B2 and session XYZ and a session instance subscribed to by executer B2 in the subscription cache of executer A.

In operation S412, entity workA_1 in executer A calls a publishing interface to publish a first message, such as pub(XYZ, abc.123, msg1).

In operation S413, executer A queries a subscription cache according to the information (XYZ, abc.123) of the session and session instance carried in the publishing interface. Since the session instances subscribed to by executers B1 and B2 are >, it is only required to match the session type identifier XYZ, and executer A can find two subscribers in the subscription cache, i.e., executer B1 and executer B2. Since the session load balancing rule of session XYZ is a round robin rule, executer A may select executer B1 as a peer executer.

In operation S414, executer A sends the first message to executer B1 through a socket interface.

In operation S415, executer A inserts a relationship between the information (XYZ, abc.123) of the session and the session instance and executer B1 as an affix record into the affix subscription cache of executer A.

In operation S416, after receiving the first message, executer B1 parses a message header to obtain information (XYZ, abc.123) of the session and the session instance and a communication address of a sender (i.e., executer A), and inserts these pieces of information into the affix subscription cache of executer B1. Executer B1 queries the binding cache of executer B1, and searches the binding cache for a receiving entity matched with the information of the session and the session instance carried in the first message. In the present embodiment, executer B1 finds entity workB 1_1 in the binding cache, delivers the first message to entity workB 1_1, and inserts entity workB1_1 and the information of the session and the session instance carried in the first message as an affix record into the affix binding cache of executer B1.

In operation S417, executer B1 needs to return a second message to executer A1, and may call a publishing interface to send the second message, such as pub(XYZ, abc.123, msg2).

In operation S418, executer B1 queries the affix subscription cache of executer B1 according to the information (XYZ, abc.123) of the session and the session instance carried in the publishing interface, and finds a communication address of a matched peer executer (i.e., executer A). Executer B1 may directly send the second message to executer A, without performing the matching process in the subscription cache according to the round robin rule.

In operation S419, executer B1 sends the second message to executer A through the socket interface.

In operation S420, executer A calls the publishing interface to publish a third message, such as pub(XYZ, abc.123, msg3).

In operation S421, since executer A records a relationship between (XYZ, abc.123) and executer B1 in the affix subscription cache of executer A in operation S415, executer A may find a communication address of executer B1 by querying the affix subscription cache of executer A.

In operation S422, executer A sends the third message to executer B1 through a socket interface.

It should be noted that, in the present embodiment, the sequence in which executer B1 and executer B2 subscribe to the session instance is not limited.

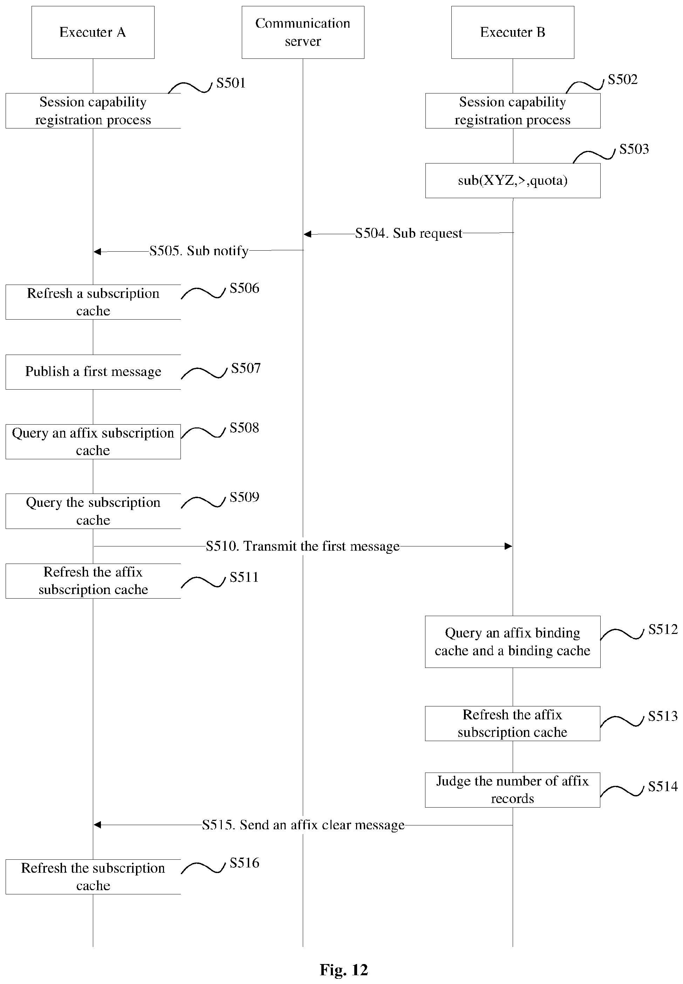

Fig. 12 is another exemplary flow diagram of a communication method under micro-service architecture according to an embodiment of the present disclosure. In the present exemplary embodiment, the executer includes an affix subscription cache and an affix binding cache, and limits the number of session instances under session XYZ in the affix subscription cache and the affix binding cache by setting an affix quota.

In the present exemplary embodiment, the capability description files of executer A and executer B may refer to the capability description files of executer A and executer B1 in the embodiment shown in Fig. 11, so the description will be omitted herein.

As shown in Fig. 12, the communication method provided by the present embodiment includes operation S501 to operation S516.

In operation S501, executer A performs a session capability registration process.

In operation S502, executer B performs a session capability registration process.

It should be noted that the session capability registration process of executer A and executer B may refer to the description of operations S101 to S109 in Fig. 8, so the description will be omitted herein. Moreover, the embodiments of the present disclosure do not limit the sequence of operations S501 and S502.

In operation S503, after the registration of executer B is completed, executer B calls a subscription interface, sub(XYZ, >, quota), where the subscribed session instance is >, which means that messages from any session instance under session XYZ may be received. Herein, quota means an affix quota, which means that executer B may subscribe to any session instance under session XYZ, but the number of session instances is limited and should not exceed the number indicated by quota.

In operation S504, executer B sends a subscription request message to the communication server, which carries information of a session and a session instance to be subscribed to by executer B, such as (XYZ, >, quota).

In operation S505, the communication server receives the subscription request message of executer B, queries a session subscription and publishing relationship according to a session type identifier XYZ, and finds that there is a related sender, i.e., executer A. Then, the communication server sends a subscription notification (e.g., sub notify) message to executer A, and pushes the address information of executer B and the information of the session and the session instance to be subscribed to by executer B, such as in the form of (XYZ, >, quota, B), to executer A.

In operation S506, after receiving the subscription notification message, executer A records executer B and session XYZ and a session instance subscribed to by executer B in the subscription cache of executer A.

In operation S507, entity workA_1 in executer A calls a publishing interface to publish a first message, such as pub(XYZ, sessionInst1, msg1).

In operation S508, executer A uses the information (XYZ, sessionInst1) of the session and session instance carried in the publishing interface as a keyword, and searches for a peer executer matched with the keyword in the affix subscription cache. If the matched peer executer is found in the affix subscription cache, the first message is directly sent to the peer executer. If not, operation S509 is performed.

In the present exemplary embodiment, a case where executer A cannot find a peer executer matched with a keyword in an affix subscription cache is taken as an example for description.

In operation S509, executer A searches for the peer executer matched with the keyword in the subscription cache. In the present embodiment, since the session instance subscribed to by executer B is >, executer A may select executer B as a receiver in the subscription cache.

In operation S510, executer A transmits the first message to executer B through a socket interface.

In operation S511, executer A inserts a relationship between the information (XYZ, sessionInst1) of the session and the session instance and executer B as an affix record into the affix subscription cache of executer A.

In operation S512, after receiving the first message, executer B takes information (XYZ, sessionInst1) of the session and the session instance carried in the first message as a keyword to search for an upper-layer entity matched with the keyword in the affix binding cache of executer B. If the entity is found, the first message is delivered to the upper-layer entity of this executer. If no entity is found, the upper-layer entity matched with the keyword is searched in the binding cache. Executer B uses the information (XYZ, sessionInst1) of the session and session instance carried in the first message as a keyword, searches for an upper-layer entity matched with the keyword in the binding cache, uses the found upper-layer entity in this executer as a receiving entity, and transfers the first message to the receiving entity. Meanwhile, executer B may insert the determined matching relationship between the receiving entity and the information of the session and the session instance carried in the first message as an affix record into the affix binding cache of executer B.

In operation S513, executer B may insert information of a sender of the first message and information of the session and the session instance carried in the first message, such as in the form of (pubInfo, XYZ, sessionInst1), as an affix record into the affix subscription cache of executer B.

In operation S514, executer B judges whether the number of affix records under session XYZ in the affix subscription cache of executer B exceeds quota. If the number of affix records exceeds quota, executer B calls an affix clear interface to clear all affix records related to session XYZ in the affix subscription cache and the affix binding cache.

In operation S515, executer B sends an affix clear message to executer A, and notifies executer A to clear all the affix records related to session XYZ.

In operation S516, after receiving the affix clear message, executer A clears all the affix records related to session XYZ in the affix subscription cache and the affix binding cache, and makes a block mark on executer B in the subscription cache.

In the present embodiment, when executer A continues to send communication messages of other session instances of session XYZ (e.g., sessionInst2), and executer B is matched in the subscription cache, because executer B is marked with the block mark, executer A will select other subscribers which have subscribed to the session instead of executer B.

The communication method and system under the micro-service architecture provided by the embodiments of the present disclosure may provide a high-performance and low-delay communication platform for communication software modified based on the micro-service architecture. The embodiments of the present disclosure propose the concepts of sessions and session instances, and multiple calls in the same session are distinguished through the session instances. In the process of modifying single software architecture into micro-service architecture, not only a peer address is found, but also a call instance is located through a two-stage discovery process (including a session capability registration process and a session instance subscription process). Moreover, based on the attribute setting of the session, the service can be selected and balanced through the matching during message sending and receiving. In the process of elastic scaling of micro-services, the service only needs to focus on the rule, and the actual implementation is transparent to the service. Moreover, the affix mechanism (i.e., setting an affix subscription cache and an affix binding cache) proposed in the embodiments of the present disclosure not only supports the communication decoupling between micro-services, but also associates the session instance with a related message sequence, so that the user context in the user-level communication keeps consistent in the message interaction process within a certain period of time. In addition, the number of session instances processed may also be limited by setting an affix quota.

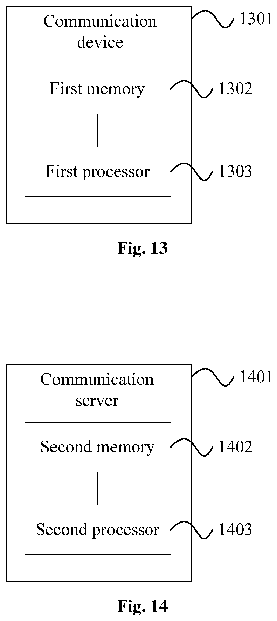

Fig. 13 is a schematic diagram of a communication device according to an embodiment of the present disclosure. As shown in Fig. 13, the embodiment of the present disclosure provides a communication device 1301, which includes: a first memory 1302 and a first processor 1303. The first memory 1302 is adapted to store a communication program under micro-service architecture. The communication program, when executed by the first processor 1303, implements the operations of the communication method provided by the above embodiments, such as the operations shown in Fig. 4 or Fig. 5 or Fig. 6. It will be understood by a person having ordinary skill in the art that the structure shown in Fig. 13 is only a schematic diagram of a part of the structure related to the solution of the embodiments of the present disclosure, and does not constitute a limitation of the communication device 1301 to which the solution of the embodiments of the present disclosure is applied. The communication device 1301 may include more or fewer components than those shown in the figures, or may have some components combined, or may have different component arrangements.

The first processor 1303 may include but is not limited to a processing apparatus such as a Micro Controller Unit (MCU) or a Field Programmable Gate Array (FPGA). The first memory 1302 may be configured to store a software program and module of application software, such as a program instruction or module corresponding to the communication method in the present embodiment. The first processor 1303 executes various functional applications and data processing, for example, implements the communication method provided in the present embodiment by running the software program and module stored in the first memory 1302. The first memory 1302 may include a high speed random access memory and may also include a non-volatile memory such as one or more magnetic storage apparatuses, a flash memory, or other non-volatile solid state memories. In some examples, the first memory 1302 may include memories remotely located relative to the first processor 1303, which may be connected to the communication device 1301 over a network. The examples of such networks include, but are not limited to, the Internet, the Intranet, local area networks, mobile communication networks, and combinations thereof.

Fig. 14 is a schematic diagram of a communication server according to an embodiment of the present disclosure. As shown in Fig. 14, the embodiment of the present disclosure provides a communication server 1401, which includes: a second memory 1402 and a second processor 1403. The second memory 1402 is adapted to store a communication program under micro-service architecture. The communication program, when executed by the second processor 1403, implements the operations of the communication method provided by the above embodiment, such as the operations shown in Fig. 7. It will be understood by a person having ordinary skill in the art that the structure shown in Fig. 14 is only a schematic diagram of a part of the structure related to the solution of the embodiments of the present disclosure, and does not constitute a limitation of the communication server 1401 to which the solution of the embodiments of the present disclosure is applied. The communication server 1401 may include more or fewer components than those shown in the figures, or may have some components combined, or may have different component arrangements.

The second processor 1403 may include but is not limited to a processing apparatus such as an MCU or an FPGA. The second memory 1402 may be configured to store a software program and module of application software, such as a program instruction or module corresponding to the communication method in the present embodiment. The second processor 1403 executes various functional applications and data processing, for example, implements the communication method provided in the present embodiment by running the software program and module stored in the second memory 1402. The second memory 1402 may include a high speed random access memory and may also include a non-volatile memory such as one or more magnetic storage apparatuses, a flash memory, or other non-volatile solid state memories. In some examples, the second memory 1402 may include memories remotely located relative to the second processor 1403, which may be connected to the communication server 1401 over a network. The examples of such networks include, but are not limited to, the Internet, the Intranet, local area networks, mobile communication networks, and combinations thereof.

In addition, the embodiment of the present disclosure also provides a computer-readable medium, which stores a communication program under micro-service architecture. The communication program, when executed by a processor, implements the operations of the communication method provided by the above embodiments, such as the operations described in any embodiment in Fig. 4 to Fig. 7.

Those of ordinary skill in the art may understand that all or some of the operations in the methods disclosed above, and functional modules/units in systems and apparatuses may be implemented as software, firmware, hardware, and suitable combinations thereof. In a hardware implementation manner, the partitioning between functional modules/units mentioned in the above description does not necessarily correspond to the partitioning of physical components. For example, one physical component may have multiple functions, or one function or operation may be performed by several physical components in cooperation. Some or all of the components may be implemented as software executed by a processor, such as a digital signal processor, or a microprocessor, or as hardware, or as an integrated circuit, such as an application specific integrated circuit. Such software may be distributed over a computer readable medium, which may include computer storage media (or non-transitory media) and communication media (or transitory media). As is well known to those of ordinary skill in the art, the term computer storage media includes volatile and non-volatile, removable and non-removable media implemented in any method or technology for storage of information (such as computer readable instructions, data structures, program modules or other data). The computer storage media include, but are not limited to, a RAM, a ROM, an EEPROM, a flash memory or other memory technologies, a CD-ROM, a Digital Versatile Disk (DVD) or other optical disk memories, a magnetic cassette, a magnetic tape, a magnetic disk storage or other magnetic storage devices, or any other media which may be used to store the desired information and accessed by a computer. In addition, as is well known to those of ordinary skill in the art, the communication media typically include computer readable instructions, data structures, program modules, or other data in a modulated data signal such as a carrier wave or other transport mechanism and may include any information delivery media.

## Claims

1. A communication method under micro-service architecture,
wherein an executer is a minimum communication unit under the micro-service architecture, and one micro-service corresponds to one or more executers, wherein the executer is a process or a container;
wherein the micro-service architecture comprises a communication server (12) and at least two executers, an executer (10a) and a peer executer (10b);
wherein a session is a communication connection between micro-services, and the session is able to be published or subscribed to, wherein one session comprises at least one session instances;
the method comprising:
sending (S10, S20, S30), by the executer (10a), a session register request message to the communication server (12), wherein the session register request message at least carries information of the executer (10a) comprising at least a communication address of the executer (10a), a session set to be registered and an attribute of any session in the session set, wherein the session set to be registered comprises at least one of a publishable session set and a subscribable session set, wherein one or more sessions are comprised in the session set;
receiving (S11, S21, S31), from the communication server (12) by the executer (10a), information of the peer executer (10b) that has a session subscription and publishing relationship with the executer (10a) according to the sent session register request message; and
as a subscriber, the executer (10a) sending to the communication server (12) or broadcasting to the peer executer (10b) a subscription request message which carries information of a session instance of a registered session subscribed to by the executer (10a), wherein a binding cache of the executer (10a) as the subscriber stores a matching relationship between entities in the executer (10a) and sessions and session instances subscribed to by the entities in the executer (10a); and
as a publisher, the executer (10a) receiving from the communication server (12) a subscription notification message which carries information of a session instance of a registered session subscribed to by the peer executer (10b) as well as a communication address of the peer executer (10b), wherein a subscription cache of the executer as the publisher stores the communication address of the peer executer (10b) subscribing to the session instance of the registered session from the executer (10a), and the information of the session and the session instance subscribed to by the peer executer (10b);
wherein communication messages for the session instance between the executer (10a) and the peer executer (10b) are not transmitted through the communication server (12), but are directly transmitted between the executer (10a) and the peer executers (10b).

2. The method according to claim 1, further comprising:
when publishing a communication message, determining (S23), by the executer (10a), the peer executer (10b) receiving the communication message according to information of a session and a session instance carried in the communication message and an attribute of the session, and sending (S23), by the executer (10a), the communication message to the determined peer executer (10b).

3. The method according to claim 2, wherein determining (S23) the peer executer (10b) receiving the communication message according to the information of the session and the session instance carried in the communication message and the attribute of the session comprises:
selecting, by the executer (10a), a peer executer subscribing to the session and the session instance from the subscription cache according to the information of the session and the session instance carried in the communication message and the attribute of the session as the peer executer (10b) receiving the communication message.

4. The method according to claim 2, wherein the executer (10a) further comprises an affix subscription cache, wherein the affix subscription cache is used for storing a matching relationship between the information of the session and the session instance carried in the communication message and the peer executer (10b); and
determining (S23) the peer executer (10a) receiving the communication message according to the information of the session and the session instance carried in the communication message and the attribute of the session comprises:
searching, by the executer, for a peer executer matched with the information of the session and the session instance carried in the communication message from the affix subscription cache;
in a case of finding a matched peer executer from the affix subscription cache, determining, by the executer (10a), the found peer executer as the peer executer (10b) receiving the communication message; and
in a case of not finding the matched peer executer from the affix subscription cache, selecting, by the executer, a peer executer subscribing to the session and the session instance from the subscription cache according to the information of the session and the session instance carried in the communication message and the attribute of the session as the peer executer (10b) receiving the communication message, and then adding a matching relationship between the information of the session and the session instance carried in the communication message and the peer executer (10a) to the affix subscription cache.

5. The method according to claims 3 or 4, wherein the attribute of the session comprises: a session load balancing rule and an instance matching rule; and
selecting the peer executer subscribing to the session and the session instance from the subscription cache according to the information of the session and the session instance carried in the communication message and the attribute of the session as the peer executer (10b) receiving the communication message comprises:
searching for peer executers subscribing to the session and the session instance from the subscription cache according to the instance matching rule of the session carried in the communication message, and selecting one of the found peer executers as the peer executer (10a) receiving the communication message according to the session load balancing rule of the session.

6. The method according to claim 1, further comprising:
after the executer (10a) receives a communication message, determining (S33) an entity receiving the communication message in the executer (10a) according to information of a session and a session instance carried in the communication message, and delivering (S33) the communication message to the determined entity.

7. The method according to claim 6, wherein determining (S33) the entity receiving the communication message in the executer (10a) according to the information of the session and the session instance carried in the communication message comprises:
searching, by the executer, for entities subscribing to the session and the session instance from the binding cache according to the information of the session and the session instance carried in the communication message, and selecting one of the found entities as the entity receiving the communication message.

8. The method according to claim 6, wherein the executer further comprises an affix binding cache, wherein the affix binding cache is used for storing a matching relationship between a selected entity in the binding cache and the session and the session instance; and
determining (S33) the entity receiving the communication message in the executer (10a) according to the information of the session and the session instance carried in the communication message comprises:
after receiving a communication message carrying information of a session and a session instance, searching, by the executer (10a), for an entity matched with the session and the session instance from the affix binding cache;
in a case of finding a matched entity from the affix binding cache, determining, by the executer (10a), the found entity as the entity receiving the communication message; and
in a case of not finding the matched entity from the affix binding cache, searching, by the executer (10a), for entities subscribing to the session and the session instance from the binding cache according to the information of the session and the session instance carried in the communication message, selecting, by the executer (10a), one of the found entities as the entity receiving the communication message, and then adding, by the executer (10a), a matching relationship between the selected entity in the binding cache and the session and the session instance to the affix binding cache as an affix record.

9. The method according to claim 8, wherein the executer (10a) further comprises an affix subscription cache; and
after the executer (10a) adds the matching relationship between the selected entity in the binding cache and the session and the session instance to the affix binding cache, the method further comprises:
adding, by the executer (10a), a matching relationship between the information of the session and the session instance carried in the communication message and the peer executer (10b) sending the communication message to the affix subscription cache as an affix record in the affix subscription cache; and
in a case where the number of affix records related to the session in the affix subscription cache is greater than a preset affix quota, clearing, by the executer (10a), the affix records related to the session in the affix subscription cache and the affix binding cache, and notifying, by the executer (10a), the peer executer (10b) to clear affix records related to the session.

10. The method according to claim 1, wherein after the executer (10a) sending to the communication server (12) a subscription request message which carries information of a session instance of a registered session subscribed to by the executer (10a), the method further comprises:
sending, by the communication server (12), the information of the session and the session instance subscribed to by the executer (10a) to the peer executer (10b).

11. The method according to claim 1, wherein after sending (S10, S20, S30), by the executer (10a), the session register request message to the communication server (12), the method further comprises:
receiving, by the executer (10a) from the communication server (12), information of a registered session based on which the session subscription and publishing relationship is established between the executer (10a) and the peer executer (10b).

12. A communication system under micro-service architecture, the system comprising: a communication server (12) and at least two executers, an executer (10a) and a peer executer (10b), wherein the executer (10a, 10b) is a minimum communication unit under the micro-service architecture, and one micro-service corresponds to one or more executers, wherein the executer (10a, 10b) is a process or a container;
wherein a session is a communication connection between micro-services, and the session is able to be published or subscribed to, wherein one session comprises at least one session instances;
the executer (10a) is adapted to send a session register request message to the communication server (12), wherein the session register request message at least carries information of the executer (10a) comprising at least a communication address of the executer (10a), a session set to be registered and an attribute of any session in the session set, wherein the session set to be registered comprises at least one of a publishable session set and a subscribable session set, wherein one or more sessions are comprised in the session set;
the executer (10a) is further adapted to receive, from the communication server (12), information of the peer executer (10b) that has a session subscription and publishing relationship with the executer (10a) according to the sent session register request message; and
as a subscriber, the executer (10a) is adapted to send to the communication server (12) or broadcast to the peer executer (10b) a subscription request message which carries information of a session instance of a registered session subscribed to by the executer (10a), wherein a binding cache of the executer (10a) as the subscriber stores a matching relationship between entities in the executer (10a) and sessions and session instances subscribed to by the entities in the executer (10a);
and
as a publisher, the executer (10a) is adapted to receive from the communication server (12) a subscription notification message which carries information of a session instance of a registered session subscribed to by the peer executer (10b) as well as a communication address of the peer executer (10b), wherein a subscription cache of the executer as the publisher stores the communication address of the peer executer (10b) subscribing to the session instance of the registered session from the executer (10a), and the information of the session and the session instance subscribed to by the peer executer (10b);
wherein communication messages for the session instance between the executer (10a) and the peer executer (10b) are not transmitted through the communication server (12), but are directly transmitted between the executer (10a) and the peer executers (10b).

13. The communication system according to claim 12, wherein as a publisher, the executer (10a) is adapted to determine, when publishing a communication message, the peer executer (10b) receiving the communication message according to information of a session and a session instance carried in the communication message and an attribute of the session, and send the communication message to the determined peer executer (10b).

## Patentansprüche

1. Kommunikationsverfahren unter Mikrodienstarchitektur, wobei ein Ausführer eine Minimum-Kommunikationseinheit unter der Mikrodienstarchitektur ist und ein Mikrodienst einem oder mehreren Ausführern entspricht, wobei der Ausführer ein Prozess oder ein Container ist;
wobei die Mikrodienstarchitektur einen Kommunikationsserver (12) und mindestens zwei Ausführer, einen Ausführer (10a) und einen Peer-Ausführer (10b), umfasst;
wobei eine Sitzung eine Kommunikationsverbindung zwischen Mikrodiensten ist und die Sitzung veröffentlicht oder abonniert werden kann, wobei eine Sitzung mindestens eine Sitzungsinstanz umfasst;
wobei das Verfahren Folgendes umfasst:
Senden (S10, S20, S30) einer Sitzungsregistrierungs-Anfragenachricht durch den Ausführer (10a) an den Kommunikationsserver (12), wobei die Sitzungsregistrierungs-Anfragenachricht mindestens Informationen des Ausführers (10a) enthält, die mindestens eine Kommunikationsadresse des Ausführers (10a), einen zu registrierenden Sitzungssatz und ein Attribut einer beliebigen Sitzung in dem Sitzungssatz umfassen, wobei der zu registrierende Sitzungssatz mindestens einen aus einem veröffentlichbaren Sitzungssatz und einem abonnierbaren Sitzungssatz umfasst, wobei eine oder mehrere Sitzungen in dem Sitzungssatz enthalten sind;
Empfangen (S11, S21, S31) von Informationen über den Peer-Ausführer (10b), der eine Sitzungsteilnahme- und -veröffentlichungsbeziehung mit dem Ausführer (10a) gemäß der gesendeten Sitzungsregister-Anforderungsnachricht hat, von dem Kommunikationsserver (12) durch den Ausführer (10a); und
als Teilnehmer, Senden durch den Ausführer (10a) einer Teilnahmeanfragenachricht an den Kommunikationsserver (12) oder Ausstrahlen dieser an den Peer-Ausführer (10b), die Informationen über eine Sitzungsinstanz einer registrierten Sitzung enthält, die von dem Ausführer (10a) abonniert wurde, wobei ein Bindungscache des Ausführers (10a) als Teilnehmer eine übereinstimmende Beziehung zwischen Entitäten in dem Ausführer (10a) und Sitzungen und Sitzungsinstanzen speichert, die von den Entitäten in dem Ausführer (10a) abonniert wurden; und
als Veröffentlicher, Empfangen durch den Ausführer (10a) einer Teilnahmebenachrichtungsnachricht von dem Kommunikationsserver (12), die Informationen über eine Sitzungsinstanz einer registrierten Sitzung enthält, die von dem Peer-Ausführer (10b) abonniert wurde, sowie eine Kommunikationsadresse des Peer-Ausführers (10b), wobei ein Teilnahmecache des Ausführers als Veröffentlicher die Kommunikationsadresse des Peer-Ausführers (10b), der die Sitzungsinstanz der registrierten Sitzung von dem Ausführer (10a) abonniert, und die Informationen über die Sitzung und die Sitzungsinstanz, die von dem Peer-Ausführer (10b) abonniert wurden, speichert;
wobei Kommunikationsnachrichten für die Sitzungsinstanz zwischen dem Ausführer (10a) und dem Peer-Ausführer (10b) nicht über den Kommunikationsserver (12), sondern direkt zwischen dem Ausführer (10a) und den Peer-Ausführern (10b) übertragen werden.

2. Verfahren nach Anspruch 1, ferner umfassend:
wenn eine Kommunikationsnachricht veröffentlicht wird, Bestimmen (S23), durch den Ausführer (10a), dass der Peer-Ausführer (10b) die Kommunikationsnachricht gemäß Informationen über eine Sitzung und eine Sitzungsinstanz, die in der Kommunikationsnachricht enthalten sind, und ein Attribut der Sitzung empfängt, und Senden (S23) der Kommunikationsnachricht an den bestimmten Peer-Ausführer (10b) durch den Ausführer (10a).

3. Verfahren nach Anspruch 2, wobei das Bestimmen (S23), dass der Peer-Ausführer (10b) die Kommunikationsnachricht gemäß den Informationen der Sitzung und der Sitzungsinstanz, die in der Kommunikationsnachricht enthalten sind, und das Attribut der Sitzung empfängt, Folgendes umfasst:
Auswählen, durch den Ausführer (10a), eines Peer-Ausführers, der an der Sitzung und der Sitzungsinstanz aus dem Teilnahmecache teilnimmt, gemäß den Informationen der Sitzung und der Sitzungsinstanz, die in der Kommunikationsnachricht enthalten sind, und dem Attribut der Sitzung, wenn der Peer-Ausführer (10b) die Kommunikationsnachricht empfängt.

4. Verfahren nach Anspruch 2, wobei der Ausführer (10a) ferner einen Affix-Teilnahmecache umfasst, wobei der Affix-Teilnahmecache zum Speichern einer übereinstimmenden Beziehung zwischen den Informationen der Sitzung und der Sitzungsinstanz, die in der Kommunikationsnachricht enthalten sind, und dem Peer-Ausführer (10b) verwendet wird; und
das Bestimmen (S23), dass der Peer-Ausführer (10a) die Kommunikationsnachricht gemäß den in der Kommunikationsnachricht enthaltenen Informationen über die Sitzung und die Sitzungsinstanz, und das Attribut der Sitzung empfängt, Folgendes umfasst:
Suchen nach einem Peer-Ausführer durch den Ausführer, der mit den Informationen der Sitzung und der Sitzungsinstanz übereinstimmt, die in der Kommunikationsnachricht aus dem Affix-Teilnahmecache enthalten sind;
im Fall des Findens eines übereinstimmenden Peer-Ausführers aus dem Affix-Teilnahmecache, Bestimmen des gefundenen Peer-Ausführers durch den Ausführer (10a) als den Peer-Ausführer (10b), der die Kommunikationsnachricht empfängt; und
im Fall, in dem der übereinstimmende Peer-Ausführer aus dem Affix-Teilnahmecache nicht gefunden wird, Auswählen eines Peer-Ausführers, der die Sitzung und die Sitzungsinstanz aus dem Teilnahmecache abonniert, durch den Ausführer gemäß den Informationen der Sitzung und der Sitzungsinstanz, die in der Kommunikationsnachricht enthalten sind, und dem Attribut der Sitzung als den Peer-Ausführer (10b), der die Kommunikationsnachricht empfängt, und dann Hinzufügen einer übereinstimmenden Beziehung zwischen den Informationen der Sitzung und der Sitzungsinstanz, die in der Kommunikationsnachricht enthalten sind, und dem Peer-Ausführer (10a) zu dem Affix-Teilnahmecache.

5. Verfahren nach Anspruch 3 oder 4, wobei das Attribut der Sitzung Folgendes umfasst:
eine Sitzungslastausgleichsregel und eine Instanzabgleichsregel; und
das Auswählen des Peer-Ausführers, der die Sitzung und die Sitzungsinstanz aus dem Teilnahmecache gemäß den Informationen der Sitzung und der Sitzungsinstanz, die in der Kommunikationsnachricht enthalten sind, abonniert, und des Attributs der Sitzung, wenn der Peer-Ausführer (10b) die Kommunikationsnachricht empfängt, Folgendes umfasst:
Suchen nach Peer-Ausführern, die die Sitzung und die Sitzungsinstanz aus dem Teilnahmecache gemäß der Instanzabgleichsregel der Sitzung, die in der Kommunikationsnachricht enthalten ist, abonnieren, und Auswählen eines der gefundenen Peer-Ausführer als den Peer-Ausführer (10a), der die Kommunikationsnachricht gemäß der Sitzungslastausgleichsregel der Sitzung empfängt.

6. Verfahren nach Anspruch 1, ferner umfassend:
nachdem der Ausführer (10a) eine Kommunikationsnachricht empfängt, Bestimmen (S33), dass eine Entität die Kommunikationsnachricht in dem Ausführer (10a) gemäß Informationen über eine Sitzung und eine Sitzungsinstanz, die in der Kommunikationsnachricht enthalten sind, empfängt und Liefern (S33) der Kommunikationsnachricht an die bestimmte Entität.

7. Verfahren nach Anspruch 6, wobei das Bestimmen (S33), dass die Entität die Kommunikationsnachricht in dem Ausführer (10a) gemäß den Informationen der Sitzung und der Sitzungsinstanz, die in der Kommunikationsnachricht enthalten sind, Folgendes umfasst:
Suchen nach Entitäten, die die Sitzung und die Sitzungsinstanz abonnieren, aus dem Bindungscache durch den Ausführer gemäß den Informationen über die Sitzung und die Sitzungsinstanz, die in der Kommunikationsnachricht enthalten sind, und Auswählen einer der gefundenen Entitäten als die Entität, die die Kommunikationsnachricht empfängt.

8. Verfahren nach Anspruch 6, wobei der Ausführer ferner einen Affix-Bindungscache umfasst, wobei der Affix-Bindungscache zum Speichern einer übereinstimmenden Beziehung zwischen einer ausgewählten Entität in dem Bindungscache und der Sitzung und der Sitzungsinstanz verwendet wird; und
das Bestimmen (S33), dass die Entität die Kommunikationsnachricht in dem Ausführer (10a) gemäß den Informationen der Sitzung und der Sitzungsinstanz, die in der Kommunikationsnachricht enthalten sind, empfängt, Folgendes umfasst:
nach dem Empfangen einer Kommunikationsnachricht, in der Informationen über eine Sitzung und eine Sitzungsinstanz enthalten sind, Suchen nach einer Entität, die mit der Sitzung und der Sitzungsinstanz übereinstimmt, durch den Ausführer (10a) aus dem Affix-Bindungscache;
im Fall des Findens einer übereinstimmenden Entität aus dem Affix-Bindungscache, Bestimmen der gefundenen Entität als die Entität, die die Kommunikationsnachricht empfängt, durch den Ausführer (10a); und
im Fall, in dem die übereinstimmende Entität aus dem Affix-Bindungscache nicht gefunden wird, Suchen nach Entitäten, die die Sitzung und die Sitzungsinstanz abonnieren, aus dem Bindungscache durch den Ausführer (10a) gemäß den Informationen über die Sitzung und die Sitzungsinstanz, die in der Kommunikationsnachricht enthalten sind, Auswählen einer der gefundenen Entitäten als die Entität, die die Kommunikationsnachricht empfängt, durch den Ausführer (10a), und dann Hinzufügen einer übereinstimmenden Beziehung zwischen der ausgewählten Entität in dem Bindungscache und der Sitzung und der Sitzungsinstanz zu dem Affix-Bindungscache als ein Affix-Datensatz durch den Ausführer (10a).

9. Verfahren nach Anspruch 8, wobei der Ausführer (10a) ferner einen Affix-Teilnahmecache umfasst; und
nachdem der Ausführer (10a) die übereinstimmende Beziehung zwischen der ausgewählten Entität in dem Bindungscache und der Sitzung und der Sitzungsinstanz zu dem Affix-Bindungscache hinzufügt hat, das Verfahren ferner Folgendes umfasst:
Hinzufügen einer übereinstimmenden Beziehung zwischen den Informationen der Sitzung und der Sitzungsinstanz, die in der Kommunikationsnachricht enthalten sind, durch den Ausführer (10a) und den Peer-Ausführer (10b), der die Kommunikationsnachricht an den Affix-Teilnahmecache als Affix-Datensatz in dem Affix-Teilnahmecache sendet; und
im Fall, in dem die Anzahl der Affix-Datensätze, die sich auf die Sitzung in dem Affix-Teilnahmecache beziehen, größer ist als eine voreingestellte Affix-Quote, Löschen der Affix-Datensätze, die sich auf die Sitzung in dem Affix-Teilnahmecache und dem Affix-Bindungscache beziehen, durch den Ausführer (10a), und Benachrichtigen des Peer-Ausführers (10b) durch den Ausführer (10a), die Affix-Datensätze, die sich auf die Sitzung beziehen, zu löschen.

10. Verfahren nach Anspruch 1, wobei nachdem der Ausführer (10a) eine Abonnementanfragenachricht, in der Informationen über eine Sitzungsinstanz einer registrierten Sitzung, die von dem Ausführer (10a) abonniert wurde, enthalten sind, an den Kommunikationsserver (12) sendet, das Verfahren ferner Folgendes umfasst:
Senden der Informationen über die Sitzung und die Sitzungsinstanz, die von dem Ausführer (10a) abonniert wurden, durch den Kommunikationsserver (12) an den Peer-Ausführer (10b).

11. Verfahren nach Anspruch 1, wobei nach dem Senden (S10, S20, S30) der Sitzungsregister-Anfragenachricht an den Kommunikationsserver (12) durch den Ausführer (10a) das Verfahren ferner Folgendes umfasst:
Empfangen von Informationen über eine registrierte Sitzung, auf Basis dessen die Sitzungsteilnahme- und -veröffentlichungsbeziehung zwischen dem Ausführer (10a) und dem Peer-Ausführer (10b) hergestellt wird, durch den Ausführer (10a) von dem Kommunikationsserver (12).

12. Kommunikationssystem unter Mikrodienstarchitektur, wobei das System Folgendes umfasst: einen Kommunikationsserver (12) und mindestens zwei Ausführer, einen Ausführer (10a) und einen Peer-Ausführer (10b), wobei der Ausführer (10a, 10b) eine Minimum-Kommunikationseinheit unter der Mikrodienstarchitektur ist, und ein Mikrodienst einem oder mehreren Ausführern entspricht, wobei der Ausführer (10a, 10b) ein Prozess oder ein Container ist;
wobei eine Sitzung eine Kommunikationsverbindung zwischen Mikrodiensten ist und die Sitzung veröffentlicht oder abonniert werden kann, wobei eine Sitzung mindestens eine Sitzungsinstanz umfasst;
der Ausführer (10a) ausgelegt ist, um eine Sitzungsregistrierungs-Anfragenachricht an den Kommunikationsserver (12) zu senden, wobei die Sitzungsregistrierungs-Anfragenachricht mindestens Informationen des Ausführers (10a) enthält, die mindestens eine Kommunikationsadresse des Ausführers (10a), einen zu registrierenden Sitzungssatz und ein Attribut einer beliebigen Sitzung in dem Sitzungssatz umfassen, wobei der zu registrierende Sitzungssatz mindestens einen aus einem veröffentlichbaren Sitzungssatz und einem abonnierbaren Sitzungssatz umfasst, wobei eine oder mehrere Sitzungen in dem Sitzungssatz enthalten sind;
der Ausführer (10a) ferner ausgelegt ist, um Informationen über den Peer-Ausführer (10b), der eine Sitzungsabonnement- und -veröffentlichungsbeziehung mit dem Ausführer (10a) hat, gemäß der gesendeten Sitzungsregister-Anfragenachricht von dem Kommunikationsserver (12) zu empfangen; und
als Teilnehmer der Ausführer (10a) ausgelegt ist, um eine Teilnahmeanfragenachricht an den Kommunikationsserver (12) zu senden oder diese an den Peer-Ausführer (10b) auszustrahlen, die Informationen über eine Sitzungsinstanz einer registrierten Sitzung enthält, die von dem Ausführer (10a) abonniert wurde, wobei ein Bindungscache des Ausführers (10a) als Teilnehmer eine übereinstimmende Beziehung zwischen Entitäten in dem Ausführer (10a) und Sitzungen und Sitzungsinstanzen speichert, die von den Entitäten in dem Ausführer (10a) abonniert wurden; und
als Veröffentlicher der Ausführer (10a) ausgelegt ist, um eine Teilnahmebenachrichtungsnachricht von dem Kommunikationsserver (12), die Informationen über eine Sitzungsinstanz einer registrierten Sitzung, die von dem Peer-Ausführer (10b) abonniert wurde, enthält, sowie eine Kommunikationsadresse des Peer-Ausführers (10b) zu empfangen, wobei ein Teilnahmecache des Ausführers als Veröffentlicher die Kommunikationsadresse des Peer-Ausführers (10b), der die Sitzungsinstanz der registrierten Sitzung von dem Ausführer (10a) abonniert, und die Informationen über die Sitzung und die Sitzungsinstanz, die von dem Peer-Ausführer (10b) abonniert wurden, speichert;
wobei Kommunikationsnachrichten für die Sitzungsinstanz zwischen dem Ausführer (10a) und dem Peer-Ausführer (10b) nicht über den Kommunikationsserver (12), sondern direkt zwischen dem Ausführer (10a) und den Peer-Ausführern (10b) übertragen werden.

13. Kommunikationssystem nach Anspruch 12, wobei der Ausführer (10a) als Veröffentlicher ausgelegt ist, um beim Veröffentlichen einer Kommunikationsnachricht zu bestimmen, dass der Peer-Ausführer (10b) die Kommunikationsnachricht empfängt, gemäß Informationen über eine Sitzung und eine Sitzungsinstanz, die in der Kommunikationsnachricht enthalten sind, und einem Attribut der Sitzung, und die Kommunikationsnachricht an den bestimmten Peer-Ausführer (10b) zu senden.

## Revendications

1. Procédé de communication dans une architecture de micro-services,
dans lequel un exécuteur est une unité de communication minimale dans l'architecture de micro-services, et un micro-service correspond à un ou plusieurs exécuteurs, dans lequel l'exécuteur est un processus ou un conteneur ;
dans lequel l'architecture de micro-services comprend un serveur de communication (12) et au moins deux exécuteurs, un exécuteur (10a) et un exécuteur homologue (10b) ;
dans lequel une session est une connexion de communication entre des micro-services, et la session peut être publiée ou souscrite, dans lequel une session comprend au moins une instance de session ;
le procédé comprenant :
l'envoi (S10, S20, S30), par l'exécuteur (10a), d'un message de demande d'enregistrement de session au serveur de communication (12), dans lequel le message de demande d'enregistrement de session contient au moins des informations de l'exécuteur (10a) comprenant au moins une adresse de communication de l'exécuteur (10a), un ensemble de sessions à enregistrer et un attribut d'une quelconque session dans l'ensemble de sessions, dans lequel l'ensemble de sessions à enregistrer comprend au moins l'un d'un ensemble de sessions publiables et d'un ensemble de sessions souscriptibles, dans lequel une ou plusieurs sessions sont incluses dans l'ensemble de sessions ;
la réception (S11, S21, S31), en provenance du serveur de communication (12) par l'exécuteur (10a), d'informations de l'exécuteur homologue (10b) qui a une relation de souscription et de publication de session avec l'exécuteur (10a) selon le message de demande d'enregistrement de session envoyé ; et
en tant que souscripteur, l'envoi par l'exécuteur (10a) au serveur de communication (12) ou la diffusion à l'exécuteur homologue (10b) d'un message de demande de souscription qui contient des informations d'une instance de session d'une session enregistrée souscrite par l'exécuteur (10a), dans lequel un cache de liaison de l'exécuteur (10a) en tant que souscripteur stocke une relation de correspondance entre les entités de l'exécuteur (10a) et les sessions et instances de session auxquelles les entités de l'exécuteur (10a) ont souscrit ; et
en tant qu'éditeur, la réception par l'exécuteur (10a), en provenance du serveur de communication (12), d'un message de notification de souscription qui contient des informations d'une instance de session d'une session enregistrée à laquelle l'exécuteur homologue (10b) a souscrit, ainsi qu'une adresse de communication de l'exécuteur homologue (10b), dans lequel un cache de souscription de l'exécuteur en tant qu'éditeur stocke l'adresse de communication de l'exécuteur homologue (10b) souscrivant à l'instance de session de la session enregistrée de l'exécuteur (10a), et les informations de la session et de l'instance de session auxquelles l'exécuteur homologue (10b) a souscrit ;
dans lequel les messages de communication pour l'instance de session entre l'exécuteur (10a) et l'exécuteur homologue (10b) ne sont pas transmis par l'intermédiaire du serveur de communication (12), mais sont transmis directement entre l'exécuteur (10a) et les exécuteurs homologues (10b).

2. Procédé selon la revendication 1, comprenant en outre :
lors de la publication d'un message de communication, la détermination (S23), par l'exécuteur (10a), de l'exécuteur homologue (10b) recevant le message de communication selon des informations d'une session et d'une instance de session contenues dans le message de communication et un attribut de la session, et l'envoi (S23), par l'exécuteur (10a), du message de communication à l'exécuteur homologue (10b) déterminé.

3. Procédé selon la revendication 2, dans lequel la détermination (S23) de l'exécuteur homologue (10b) recevant le message de communication selon les informations de la session et de l'instance de session contenues dans le message de communication et l'attribut de la session comprend :
la sélection, par l'exécuteur (10a), d'un exécuteur homologue souscrivant à la session et à l'instance de session depuis le cache de souscription selon les informations de la session et de l'instance de session contenues dans le message de communication et l'attribut de la session en tant qu'exécuteur homologue (10b) recevant le message de communication.

4. Procédé selon la revendication 2, dans lequel l'exécuteur (10a) comprend en outre un cache de souscription d'affixe, dans lequel le cache de souscription d'affixe est utilisé pour stocker une relation de correspondance entre les informations de la session et de l'instance de session contenues dans le message de communication et l'exécuteur homologue (10b) ; et
la détermination (S23) de l'exécuteur homologue (10a) recevant le message de communication selon les informations de la session et de l'instance de session contenues dans le message de communication et l'attribut de la session comprend :
la recherche, par l'exécuteur, d'un exécuteur homologue mis en correspondance avec les informations de la session et de l'instance de session contenues dans le message de communication provenant du cache de souscription d'affixe ;
dans le cas où un exécuteur homologue mis en correspondance est trouvé dans le cache de souscription d'affixe, la détermination, par l'exécuteur (10a), de l'exécuteur homologue trouvé en tant que l'exécuteur homologue (10b) recevant le message de communication ; et
dans le cas où l'exécuteur homologue mis en correspondance n'est pas trouvé dans le cache de souscription d'affixe, la sélection, par l'exécuteur, d'un exécuteur homologue souscrivant à la session et à l'instance de session depuis le cache de souscription selon les informations de la session et de l'instance de session contenues dans le message de communication et l'attribut de la session en tant qu'exécuteur homologue (10b) recevant le message de communication, puis l'ajout d'une relation de correspondance entre les informations de la session et de l'instance de session contenues dans le message de communication et l'exécuteur homologue (10a) au cache de souscription d'affixe.

5. Procédé selon les revendications 3 ou 4, dans lequel l'attribut de la session comprend :
une règle d'équilibrage de charge de session et une règle de mise en correspondance des instances ; et
la sélection de l'exécuteur homologue souscrivant à la session et à l'instance de session depuis le cache de souscription selon les informations de la session et de l'instance de session contenues dans le message de communication et l'attribut de la session en tant qu'exécuteur homologue (10b) recevant le message de communication comprend :
la recherche d'exécuteurs homologues souscrivant à la session et à l'instance de session depuis le cache de souscription selon la règle de mise en correspondance des instances de la session contenue dans le message de communication, et la sélection d'un des exécuteurs homologues trouvés en tant que l'exécuteur homologue (10a) recevant le message de communication selon la règle d'équilibrage de charge de session de la session.

6. Procédé selon la revendication 1, comprenant en outre :
après réception d'un message de communication par l'exécuteur (10a), la détermination (S33) d'une entité recevant le message de communication dans l'exécuteur (10a) selon des informations d'une session et d'une instance de session contenues dans le message de communication, et la délivrance (S33) du message de communication à l'entité déterminée.

7. Procédé selon la revendication 6, dans lequel la détermination (S33) de l'entité recevant le message de communication dans l'exécuteur (10a) selon les informations de la session et de l'instance de session contenues dans le message de communication comprend :
la recherche, par l'exécuteur, d'entités souscrivant à la session et à l'instance de session depuis le cache de liaison selon les informations de la session et de l'instance de session contenues dans le message de communication, et la sélection d'une des entités trouvées en tant que l'entité recevant le message de communication.

8. Procédé selon la revendication 6, dans lequel l'exécuteur comprend en outre un cache de liaison d'affixe, dans lequel le cache de liaison d'affixe est utilisé pour stocker une relation de correspondance entre une entité sélectionnée dans le cache de liaison et la session et l'instance de session ; et
la détermination (S33) de l'entité recevant le message de communication dans l'exécuteur (10a) selon les informations de la session et de l'instance de session contenues dans le message de communication comprend :
après réception d'un message de communication contenant des informations d'une session et d'une instance de session, la recherche, par l'exécuteur (10a), d'une entité mise en correspondance avec la session et l'instance de session depuis le cache de liaison d'affixe ;
dans le cas où une entité mise en correspondance est trouvée dans le cache de liaison d'affixe, la détermination, par l'exécuteur (10a), de l'entité trouvée en tant que l'entité recevant le message de communication ; et
dans le cas où l'entité mise en correspondance n'est pas trouvée dans le cache de liaison d'affixe, la recherche, par l'exécuteur (10a), d'entités qui souscrivent à la session et à l'instance de session depuis le cache de liaison selon les informations de la session et de l'instance de session contenues dans le message de communication, la sélection, par l'exécuteur (10a), de l'une des entités trouvées en tant que l'entité recevant le message de communication, puis l'ajout, par l'exécuteur (10a), d'une relation de correspondance entre l'entité sélectionnée dans le cache de liaison et la session et l'instance de session et le cache de liaison d'affixe en tant qu'un enregistrement d'affixe.

9. Procédé selon la revendication 8, dans lequel l'exécuteur (10a) comprend en outre un cache de souscription d'affixe ; et
après que l'exécuteur (10a) a ajouté la relation de correspondance entre l'entité sélectionnée dans le cache de liaison et la session et l'instance de session au cache de liaison d'affixe, le procédé comprend en outre :
l'ajout, par l'exécuteur (10a), d'une relation de correspondance entre les informations de la session et l'instance de session contenues dans le message de communication et l'exécuteur homologue (10b) envoyant le message de communication au cache de souscription d'affixe en tant qu'un enregistrement d'affixe dans le cache de souscription d'affixe ; et
dans le cas où le nombre d'enregistrements d'affixe liés à la session dans le cache de souscription d'affixe est supérieur à un quota d'affixes prédéfini, la suppression, par l'exécuteur (10a), des enregistrements d'affixe liés à la session dans le cache de souscription d'affixe et le cache de liaison d'affixe, et la notification, par l'exécuteur (10a), à l'exécuteur homologue (10b) de supprimer les enregistrements d'affixe liés à la session.

10. Procédé selon la revendication 1, dans lequel, après que l'exécuteur (10a) a envoyé au serveur de communication (12) un message de demande de souscription contenant des informations d'une instance de session d'une session enregistrée souscrite par l'exécuteur (10a), le procédé comprend en outre :
l'envoi, par le serveur de communication (12), des informations de la session et de l'instance de session souscrites par l'exécuteur (10a) à l'exécuteur homologue (10b).

11. Procédé selon la revendication 1, dans lequel après l'envoi (S10, S20, S30), par l'exécuteur (10a), du message de demande d'enregistrement de session au serveur de communication (12), le procédé comprend en outre:
la réception, par l'exécuteur (10a) en provenance du serveur de communication (12), d'informations d'une session enregistrée sur la base de laquelle la relation de souscription et de publication de session est établie entre l'exécuteur (10a) et l'exécuteur homologue (10b).

12. Système de communication dans une architecture de micro-services, le système comprenant : un serveur de communication (12) et au moins deux exécuteurs, un exécuteur (10a) et un exécuteur homologue (10b), dans lequel l'exécuteur (10a, 10b) est une unité de communication minimale dans l'architecture de micro-services, et un micro-service correspond à un ou plusieurs exécuteurs, dans lequel l'exécuteur (10a, 10b) est un processus ou un conteneur ;
dans lequel une session est une connexion de communication entre des micro-services, et la session peut être publiée ou souscrite, dans lequel une session comprend au moins une instance de session ;
l'exécuteur (10a) est susceptible d'envoyer un message de demande d'enregistrement de session au serveur de communication (12), dans lequel le message de demande d'enregistrement de session contient au moins des informations sur l'exécuteur (10a) comprenant au moins une adresse de communication de l'exécuteur (10a), un ensemble de sessions à enregistrer et un attribut d'une quelconque session dans l'ensemble de sessions, dans lequel l'ensemble de sessions à enregistrer comprend au moins l'un d'un ensemble de sessions publiables et d'un ensemble de sessions souscriptibles, dans lequel une ou plusieurs sessions sont incluses dans l'ensemble de sessions ;
l'exécuteur (10a) est en outre susceptible de recevoir, du serveur de communication (12), des informations de l'exécuteur homologue (10b) qui a une relation de souscription et de publication de session avec l'exécuteur (10a) selon le message de demande d'enregistrement de session envoyé ; et
en tant que souscripteur, l'exécuteur (10a) est susceptible d'envoyer au serveur de communication (12) ou de diffuser à l'exécuteur homologue (10b) un message de demande de souscription contenant des informations d'une instance de session d'une session enregistrée souscrite par l'exécuteur (10a), dans lequel un cache de liaison de l'exécuteur (10a) en tant que souscripteur stocke une relation de correspondance entre les entités de l'exécuteur (10a) et des sessions et instances de session souscrites par les entités dans l'exécuteur (10a) ; et
en tant qu'éditeur, l'exécuteur (10a) est susceptible de recevoir du serveur de communication (12) un message de notification de souscription qui contient des informations d'une instance de session d'une session enregistrée souscrite par l'exécuteur homologue (10b) ainsi qu'une adresse de communication de l'exécuteur homologue (10b), dans lequel un cache de souscription de l'exécuteur en tant qu'éditeur stocke l'adresse de communication de l'exécuteur homologue (10b) souscrivant à l'instance de session de la session enregistrée depuis l'exécuteur (10a), et les informations de la session et de l'instance de session souscrites par l'exécuteur homologue (10b) ;
dans lequel les messages de communication pour l'instance de session entre l'exécuteur (10a) et l'exécuteur homologue (10b) ne sont pas transmis par l'intermédiaire du serveur de communication (12), mais sont transmis directement entre l'exécuteur (10a) et les exécuteurs homologues (10b).

13. Système de communication selon la revendication 12, dans lequel en tant qu'éditeur, **l'exécuteur** (10a) est susceptible de déterminer, lors de la publication d'un message de communication, l'exécuteur homologue (10b) recevant le message de communication selon des informations d'une session et d'une instance de session contenues dans le message de communication et un attribut de la session, et d'envoyer le message de communication à **l'exécuteur** homologue (10b) déterminé.
